(19) Europäisches Patentamt
European Patent Office
Office européen des brevets

(11) Publication number : 0 278 001 B1

(12) # EUROPEAN PATENT SPECIFICATION

(45) Date of publication of patent specification : **29.01.92 Bulletin 92/05**

(51) Int. Cl.$^5$ : **C04B 35/58**

(21) Application number : **87905862.6**

(22) Date of filing : **24.08.87**

(86) International application number : **PCT/US87/02082**

(87) International publication number : **WO 88/01260 25.02.88 Gazette 88/05**

(54) **METHOD FOR USING ORGANOPOLYSILAZANE PRECURSORS TO FORM NEW PRECERAMIC POLYMERS AND SILICON NITRIDE-RICH CERAMIC MATERIALS.**

(30) Priority : **22.08.86 US 899471**
**17.10.86 US 916109**

(43) Date of publication of application : **17.08.88 Bulletin 88/33**

(45) Publication of the grant of the patent : **29.01.92 Bulletin 92/05**

(84) Designated Contracting States : **CH DE FR GB IT LI**

(56) References cited :
**EP-A- 0 209 360**
**EP-A- 0 217 539**
**US-A- 4 482 669**

(73) Proprietor : **MASSACHUSETTS INSTITUTE OF TECHNOLOGY**
**77 Massachusetts Avenue**
**Cambridge, MA 02139 (US)**

(72) Inventor : **SEYFERTH, Dietmar**
**84 Bloomfield Street**
**Lexington, MA 02173 (US)**
Inventor : **SCHWARK, Joanne, M.**
**91 5th St., Apt. A**
**Cambridge, MA 02141 (US)**
Inventor : **YU, Yuan-Fu**
**5056 Broughton Place**
**Dayton, OH 45431 (US)**

(74) Representative : **Bass, John Henton et al**
**REDDIE & GROSE 16 Theobalds Road**
**London WC1X 8PL (GB)**

EP 0 278 001 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to a process for preparing silicon-containing preceramic polymers that is particularly useful for making silicon nitride and silicon nitride/silicon carbide and silicon oxynitride ceramics and for their pyrolysis to such ceramic materials.

There is a great deal of interest in preceramic polymer materials, which can be pyrolyzed to yield silicon carbide, silicon nitride, silicon oxynitride and other silicon-based ceramic materials. R.W. Rice, Amer. Ceram Soc. Bull., 62: 889-892 (1983). Applications for such polymers include, among others:

1. formation into complex shapes and subsequent pyrolysis to give a ceramic material of the same shape;
2. spinning into continuous fibers whose subsequent pyrolysis yields ceramic fibers;
3. as a matrix material for carbon or ceramic fibers, or as a binder for ceramic powders (with subsequent pyrolysis to form a ceramic body);
4. oxidation-resistant coatings on otherwise oxidizable materials (such as carbon/carbon composites) - after the polymer coating is made, it can be pyrolyzed to give the resistant ceramic coating;
5. infiltration of porous ceramic bodies such as ones obtained from reaction-sintered silicon nitride by the polymer itself (if liquid) or by a solution of the polymer, with subsequent pyrolysis to form a ceramic, resulting in better strength, oxidation resistance, etc., of the body; and
6. formation of thin films of the ceramic material for electronics applications.

For instance, Penn et al., J. Appl. Polymer Sci.. 27: 3751-61 (1982) describe the preparation of silicon carbide-silicon nitride fibers from a polycarbosilazane precursor. Tris(N-methylamino) methylsilane monomer was formed by reaction of monomethylamine and methyltrichlorosilane in dry petroleum ether and a polycarbosilazane resin was formed by passing the monomer over glass Raschig rings at 520°C. The brittle polymer was soluble in methylene chloride and chloroform, etc. This product was spun into fibers, crosslinked in air and then pyrolyzed to give ceramic fibers.

Other polymer precursors for forming silicon carbide and silicon nitride ceramics have been described in U.S. Pat. Nos. 3,108,985; 3,853,567; 3,892,583; 4,310,651 and 4,312,970. These linear or crosslinked polymers and processes for producing ceramic materials have generally been found to be deficient in one or more ways.

S. Yajima, Amer. Ceram. Soc. Bull., 62: 893-898; 903 (1983) discloses using $(CH_3)_2SiCl_2$ as a starting material for a preceramic polymer for the preparation of SiC-containing ceramics. The polymer of Yajima is prepared by sodium metal condensation of $(CH_3)_2SiCl_2$ to result in a polysilane, $-[(CH_3)_2Si]_n-$ (n is approximately 30). This polysilane can then form either a "Mark I" polymer or a "Mark III" polymer depending upon the treatment used. Heating in an autoclave under argon at 100 kPa at 450°-470°C for 14 hours results in a Mark I polymer while adding a few percent of a polyborodiphenylsiloxane and heating under nitrogen at ambient pressure at 350°C for 10 hours results in the Mark III polymer. In either case, the polysilicon backbone is converted to a polymeric chain in which the main repeat unit is

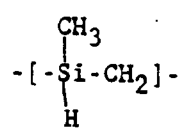
(I)

The Mark I polymer also contains some $-[(CH_3)_2SiCH_2]$-units. The Mark III polymer contains some Si-Si bonds in the form $-[(CH_3)_2Si\text{-}Si(CH_3)_2]_n$((n=2-8) units and a low percentage of $[(C_6H_5)_2SiO]$ units. These preceramic polymers can be processed to give ceramic fibers containing SiC, some free carbon and some $SiO_2$. However, there are problems associated with these polycarbosilane-derived ceramics. They have a tendency to crystallize below 1200°C, they have a $SiO_2$ content as a result of an oxidative cure step, and free carbon and a relatively low ceramic yield is obtained upon their pyrolysis for a commercial product. While the ceramic yield for the Mark III polymer is 68%, the yield for the Mark I polymer is only 54%.

Silicon oxynitrides are another important group of ceramics. This ceramic arterial has most of the same advantages as silicon nitride, but is expected to have a better oxidation stability. These are high refractory materials able to withstand temperatures up to about 1500°C before decomposing. Although K. Okamura et al, Chem. Lett. (1984): 2059-2060 (See also K. Okamura et al, Fifth Int. Conf. on Composite Materials, July 29 - August 1, 1985, Proceedings: 535-542), reported obtaining silicon oxynitride fibers after pyrolysis under ammonia, of $SiO_2$-containing polycarbosilanes (having $[CH_3Si(H)CH_2]$ as the major repeat unit), this was an expensive and inefficient process.

U.S. Patent 4,482,669 issued November 13, 1984, describes organopolysilazane preceramic polymers

whose pyrolysis gives a mixture of silicon carbide and silicon nitride wherein, generally, neither component is in large excess over the other. These polymers were obtained by the reaction of a base (such as an alkali metal hydride, amide, etc.) with the ammonolysis product of a dihalosilane, for example, $CH_3SiHCl_2$ which results in a polymerization process believed to include the dehydrocyclodimerization (DHCD) reaction shown in eq. A.

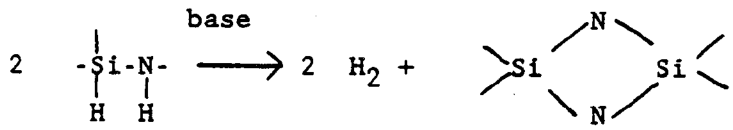


(A)

The action of a catalytic amount of the base on these cyclic oligomers links them together via such cyclodisilazane units into a sheet-like array." Treatment of, for example, the $CH_3SiHCl_2$ ammonolysis product by the base, usually KH (0.5-4 mol percent based on $CH_3SiHNH$ units), provides a polysilazane intermediate of type $[(CH_3SiHNH)_a(CH_3SiN)_b(CH_3SiHNK)_c]_n$, i.e. a "living" polymer which still contains reactive silylamide functions. This "living" polysilazane intermediate can be treated with a suitable electrophile, such as $CH_3I$ or a chlorosilane, to "neutralize" the reactive silylamide functions. Ultimately, on pyrolysis in an inert gas stream ($N_2$ or Ar) to 1000°C, the yield of ceramic residue is high (80-85%). A typical composition of such a ceramic material is $0.9\ Si_3N_4 + 1.3\ SiC + 0.75\ C$ or, on a weight % basis, 67% $Si_3N_4$, 28% SiC and 5% C.

U.S. Patent Application Serial Nos. 756,353, filed July 18, 1985, and 781,934, filed September 30, 1985 describe methods for converting organosilicon polymers containing Si-H repeat units to new and useful preceramic polymers and ceramic materials. The preceramic polymers, which are prepared by reacting either an organopolysilane or a polycarbosilane with a silylamide result in preceramic polymers whose pyrolysis gives a mixture of silicon carbide and silicon nitride ceramic materials, which are generally rich in silicon carbide

It would be useful to have a polymer precursor that is formed from readily available and relatively inexpensive starting materials, that is stable at room temperature, is fusible and/or soluble in organic solvents and whose pyrolysis can provide a high yield of ceramic products. It would also be useful to be able to have such a polymer precursor which forms a ceramic material upon pyrolysis that is rich in the silicon nitride component.

We have discovered a method for preparing preceramic organosilicon polymers, where the resultant ceramic material is generally richer in silicon nitride than obtained with the corresponding dihalosilane alone as initial starting material. The process comprises the following steps:

(a) reacting in solution anhydrous ammonia with a mixture of $R^1SiHX_2$ (wherein $R^1$ is a lower alkyl group having from 1 to about 6 carbon atoms, a substituted or unsubstituted cycloalkyl group having from 3 to about 6 carbon atoms, a substituted or unsubstituted lower alkenyl group having from 2 to about 6 carbon atoms, or a substituted or unsubstituted lower aryl group having from 6 to about 10 carbon atoms, and X is a halogen) and $RSiX_3$ (wherein R is H, a lower alkyl group having from 1 to about 6 carbon atoms, a substituted or unsubstituted cycloalkyl group having from 3 to about 6 carbon atoms, or a substituted or unsubstituted lower alkenyl group having from 2 to about 6 carbon atoms, or a substituted or unsubstituted lower aryl group having from 6 to about 10 carbon atoms) thereby forming a mixture of precursor polymers; and

(b) reacting said precursor polymers in the presence of a basic catalyst capable of deprotonating the NH functions in said precursors to form said preceramic polymer, thereby carrying out the DHCD reaction. Preferably, the resultant preceramic polymer is treated with an electrophile compound. In a preferred embodiment X is Cl, $R^1$ is a lower alkyl group and R is H or a lower alkyl group.

The polymer formed by this method can be pyrolyzed in an inert gas stream to form a black ceramic material. Pyrolysis of a preceramic polymer formed where $R^1$ is a lower alkyl group and R is H or a lower alkyl group under a stream of ammonia results in a white ceramic material.

We have also found that reaction of a polymeric silylamide, which is the intermediate formed from the dehydrocylodimerization reaction (DHCD) of the coammonolysis product of $[R^1SiHX_2]$ and $[R^2SiX_3]$ where $R^1$, $R^2$ and X are as defined above, with an organosilicon polymer containing Si-H repeat units yields new polymeric organosilicon compounds which are useful preceramic materials. Upon pyrolysis these "hybrid" polymers typically give ceramic yields significantly better than obtained for the original organosilicon polymer compound alone. The polymeric silylamide may be preformed and added to the Si-H containing organosilicon polymer. Alternatively, one may prepare the silylamide in situ, in the presence of the organosilicon compound.

The above polymeric silylamide is generated by treating the coammonolysis product of $R^1SiHX_2$ and $R^2SiX_3$ ($R^1$ and $R^2$ are as defined above) with a basic catalyst capable of deprotonating the hydrogen from a nitrogen atom adjacent to a silicon atom also referred to as dehydrocylodimerization. With either preformed polysilylamide or an in situ silylamide procedure, the reaction mixture containing the organosilicon polymer having Si-H repeat units and the polysilylamide is stirred at room temperature and preferably heated at reflux in a suitable solvent such as tetrahydrofuran to complete the reaction. The resulting solution is then cooled and quenched typically with an organic halide or a silicon halide to produce the preceramic organosilicon polymers of the present invention.

Preferably the organosilicon polymer is a polysilane compound of the formula $[(RSiH)_x(RSi)_y]_n$, (where x + y = 1, n is an integer greater than 1, R is a lower alkyl group having from 1 to about 6 carbon atoms, a lower alkenyl group having from 2 to about 6 carbon atoms, a substituted or unsubstituted lower aryl group having from 6 to about 10 carbon atoms, or a tri(lower)alkyl- or di(lower)alkylsilyl group), a polycarbosilane polymer containing repeat units of the formula $[R^aSi(H)\text{-}(CH_2)_q]$,i.e.,

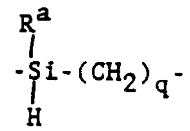 (II)

(where q is an integer 1 or greater, $R^a$ is H, a lower alkyl group having from 1 to about 6 carbon atoms, a cycloalkyl group having from 3 to about 6 carbon atoms, a substituted or unsubstituted lower alkenyl group having from 2 to about 6 carbon atoms or a substituted or unsubstituted lower aryl group having from 6 to about 10 carbon atoms), or an organohydrogen-siloxane polymer containing repeat units of the formula $[R^bSi(H)O]_n$,i.e.,

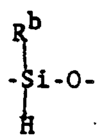 (III)

(where n is an integer 1 or greater, $R^b$ is a lower alkyl group having from 1 to about 6 carbon atoms, a cycloalkyl group having from 3 to about 6 carbon atoms, a substituted or unsubstituted lower alkenyl group having from 2 to about 6 carbon atoms or a substituted or unsubstituted lower aryl group having from 6 to about 10 carbon atoms).

Aryl-substituted polymers of the type
$[R^aSi(H)\text{-}(CH_2)_q]$, $[RSiH]_n$ and $[R^bSi(H)O]_n$
(e.g., where R, $R^a$ or $R^b$ is phenyl), react in the same way as the above described polycarbosilanes, organopolysilanes and polysiloxanes to give new polycarbosilane/organopolysilazanes, organopolysilane/organopolysilazane and polysiloxane/organopolysilazane hybrid polymers, respectively.

The polymers formed by either basic method can then be pyrolyzed to yield ceramic materials in high yield.

We have now discovered that by using the coammonolysis product of a mixture of a dihalosilane and a trihalosilane, one can obtain a preceramic polymer whose pyrolysis results in a ceramic material richer in silicon nitride than the polymer obtained by using the ammonolysis product of the corresponding dihalosilane alone. Additionally, the coammonolysis product is often more soluble than the coammonolysis product of the corresponding trihalosilane, and because an important requirement for a useful preceramic polymer is that it be processable, i.e., fusible, and/or soluble in organic solvents, the coammonolysis product is preferable.

Preferably, the dihalosilane is of the formula $R^1SiHX_2$, wherein $R^1$ is a lower alkyl group having from 1 to about 6 carbon atoms, a substituted or unsubstituted cycloalkyl group having from 3 to about 6 carbon atoms, a substituted or unsubstituted lower alkenyl group having from 2 to about 6 carbon atoms, or a substituted or unsubstituted lower aryl group having from 6 to about 10 carbon atoms, while X is a halogen, preferably, fluorine, chlorine, bromine or iodine. More preferably, $R^1$ is a lower alkyl group. Most preferably, $R^1$ is $CH_3$. X is preferably chlorine.

Preferably, the trihalosilane has the formula $RSiX_3$, wherein R is hydrogen, a lower alkyl group having from 1 to about 6 carbon atoms, a substituted or unsubstituted cycloalkyl group having from 3 to about 6 carbon atoms, a substituted or unsubstituted lower alkenyl group having from 2 to about 6 carbon atoms, or a substituted or unsubstituted lower aryl group having from 6 to about 10 carbon atoms and X is a halogen, preferably, fluorine, chlorine, bromine or iodine. More preferably, R is a hydrogen or a lower alkyl group. Still more preferably R is hydrogen or $CH_3$. Most preferably, R is hydrogen. X is preferably chlorine.

The coammonolysis reaction is carried out in any organic solvent in which the two reactants are soluble. Solvents which may be used include ethers such as dialkyl ethers, particularly diethyl ether ($Et_2O$); cyclic ethers

such as tetrahydropyran, 1,4-dioxane, preferably tetrahydrofuran (THF); glycol ethers; aliphatic hydrocarbons such as pentane, hexane; and aromatic hydrocarbons such as benzene, toluene, xylenes. Other useful solvents are well known to the person of ordinary skill in the art, based upon this disclosure. The $R^1SiHX_2/RSiX_3$ mixture is then reacted with ammonia in such a solvent to effect the coammonolysis reaction.

In a preferred embodiment of the present invention, the coammonolysis product is treated with catalytic quantities of a base capable of deprotonating the NH functions in the resultant coammonolysis product, for example, KH, in an organic solvent. A dehydrocyclodimerization reaction (DHCD) takes place, which results in a preceramic polymer that gives high ceramic yields upon pyrolysis. Preferably, the base is an alkali metal, an alkali metal hydride, an alkaline earth metal hydride, an alkali metal amide, an alkaline earth metal amide, a complex alkali metal hydride, e.g. KB (sec-Bu)$_3$H, $LiAlH_4$, etc., alkali and alkaline earth metal silylamides, an alkali metal organic compound and the like. More preferably, the base is KH. Only small amounts of the base are necessary (0.1-10 mole percent based upon the NH containing repeat unit) because the reaction is catalytic.

The coammonolysis product is reacted with the base in any organic solvent, in which the coammonolysis product is soluble without reaction. Such organic solvents include ethers, such as dialkyl ethers, preferably diethyl ether; cyclic ethers, for example, preferably, THF; glycol ethers, aliphatic hydrocarbons such as alkanes, arenes, and combinations thereof

The temperature at which this reaction takes place generally ranges from about -10°C to about +30°C. After the reaction is complete, the mixture may be quenched with an electrophile, EX, capable of reaction with residual silylamide functions. E is any organic group, preferably, a lower alkyl group or silyl group; X is preferably a halide, sulfate or sulfonate. The electrophile can be an alkyl halide, sulfate or sulfonate; a halosilane; or the like. Typically, $CH_3I$ or a chlorosilane is used although other equivalent electrophiles well-known to those skilled in the art can also be used. This quenching limits the reactivity of the "living" polymer intermediate.

The preceramic polymer produced by the DHCD reaction typically is a white solid, which is produced in virtually quantitative yield. When $R^1$ was $CH_3$, X was Cl and R was H, the proton NMR spectra of the products showed an increase in the $SiCH_3$/SiH + NH proton ratio, while the relative SiH/NH ratio was unchanged. This indicates that a hydrogen loss had taken place.

In the DHCD reactions, the molecular weight of the solid product was greater than that of the starting coammonolysis product, thus a polymerization reaction had occurred. The conversion of the oils which typically are formed in the coammonolysis reactions to the solids of the present invention results in a material that is more easily handled.

Pyrolysis of the white solid obtained in these base-catalyzed, DHCD reactions under argon from 50 to 950°C, typically produces black ceramic residues. The ceramic yield were generally excellent. These ceramic materials have a rich silicon nitride content

Relatively pure silicon nitride material can be formed when the preceramic polymer is pyrolyzed in a stream of ammonia rather than of an inert gas such as nitrogen or argon. The ammonia reacts with the polymer at higher temperatures to cleave methyl groups from silicon, so that essentially all carbon is lost. For example, where $R^1$ is $CH_3$ and R is H, the pyrolysis of the preceramic polymer derived from the DHCD product of the 1:1 coammonolysis (in THF) product to 1000°C in a stream of ammonia produced a white ceramic residue in high yield containing only 0.29% by weight C, with the remainder being silicon nitride. When both $R^1$ and R were $CH_3$, the pyrolysis of the preceramic polymer derived from the DHCD product of the 6:1 coammonolysis (in $Et_2O$) product to 1000°C in a stream of ammonia produced a white ceramic residue containing only 0.36% by weight of carbon. Similarly, pyrolysis of a 3:1 $CH_3SiHCl_2$:$C_2H_5SiCl_3$ (coammnolysis product in $Et_2O$) KH-catalyzed DHCD (in THF) product to 1000°C in a stream of ammonia produced an essentially pure white residue with a very faint brown tinge. However, alkenyl groups appear to be more intimately involved with the pyrolysis chemistry. Pyrolysis of a control ammonolysis product of $CH_2$=$CHSiCl_3$ to 1000°C in a stream of ammonia produced a brown ceramic residue, while pyrolysis of a 3:1 $CH_3SiHCl_2$:$CH_2$=$CHSiCl_3$ (coammonolysis in THF) KH-catalyzed DHCD (in THF) product in a stream of ammonia produced a ceramic that was black with touches of white and brown.

A wide range of $R^1SiHX_2$:$RSiX_3$ ratios can be used in preparing the coammonolysis product, the mole ratio can be for example from about 20:1 to 1:20, it preferably ranges from about 8:1 to 1:7. Generally, the higher the mole % of dihalosilane used, the more soluble is the coammonolysis product. However, this product generally forms a ceramic material in lower yields. In addition, at a high mole % of trihalosilane, the DHCD reaction has less effect. The DHCD reaction at high mole % of trihalosilane should be limited to the soluble reaction product. For certain halosilanes, however, the coammonolysis product obtained with high levels of trihalosilane has properties that are quite useful without a subsequent DHCD reaction. When a DHCD reaction is contemplated, the mole ratio of $R^1SiHX_2$:$RSiX_3$ is preferably from about 8:1 to about 1:6, more preferably from about 8:1 to about 1:2, even more preferably about 6:1 to about 1:1. A higher mole ratio of dihalosilane to trihalosilane, such as about 6:1 to 3:1, provides a coammonolysis product that is typically soluble, which, when subjected

to a DHCD reaction, results in a preceramic polymer that provides excellent yields of ceramic material. However, a ratio of about 2:1 to 1:2, preferably about 1:1, produces a preceramic polymer whose pyrolysis in an inert atmosphere, typically, results in a greater percent of silicon nitride in the ceramic material than obtained on using the higher mole ratio of dihalosilane. Thus, depending upon the desired end product and reaction sequences, the mole ratio of dihalosilane:trihalosilane will vary. The particular ratio to use in a given situation can readily be determined empirically by the desired end use based upon the present disclosure.

For example, ammonolysis of $HSiCl_3$ alone gives mostly insoluble, highly cross-linked products. The highest yield of soluble products (47%) was obtained when the $HSiCl_3$ ammonolysis was carried out at -20°C (at 0°C the yield of soluble product was 17%, at -78°C it was 20%). However, these initially soluble silazanes become insoluble after the solvent is removed. Since the main requirement of a preceramic polymer is that it must be processable, i.e., fusible and/or soluble in organic solvents, ammonolysis of $HSiCl_3$ alone is not satisfactory.

When R is H, and $R^1$ is $CH_3$ and X is Cl, the preferred ratio of $R^1SiHX_2$:$RSiX_3$ ranges from about 8:1 to about 1:4; more preferably, the ratio is about 6:1 to about 1:2 when a DHCD reaction is used; more preferably about 6:1 to about 3:1 when one is concerned with the solubility of the starting materials; and about 3:1 to about 1:2, more preferably about 1:1 when one is interested in the resultant weight percent of the ceramic residue obtained after pyrolysis in an inert atmosphere; and 1:1 to about 1:4, most preferably about 1:3 when the coammonolysis product without a DHCD reaction is desired.

In either $Et_2O$ or THF, the 6:1 and 3:1 ratios used in the coammonolysis produced polysilazane oils with molecular weights in the range 390-401 g/mol and 480 g/mol, respectively. When a 1:1 reactant ratio was used, waxes of somewhat higher (764-778 g/mol) molecular weights were obtained in both solvents. In the 1:1 reaction carried out in $Et_2O$ the yield of soluble product was only 40%, but in THF it was nearly quantitative.

The oils produced in the 6:1 and 3:1 reactions in $Et_2O$ are stable on long-term storage at room temperature in the absence of moisture (e.g., in an inert atmosphere box). However, the waxy product of 1:1 reaction in ($Et_2O$) and all the coammonolysis products prepared in THF formed gels (i.e., became insoluble) after 3-4 weeks at room temperature, even when stored in a nitrogen-filled dry box. (See Tables 1 and 2).

TABLE 1.

COAMMONOLYSIS OF METHYLDICHLOROSILANE AND TRICHLOROSILANE IN DIETHYL ETHER MEDIUM. DEHYDROCYCLODIMERIZATION OF THE PRODUCTS.

| Reaction | $CH_3SiHCl_2$ / $HSiCl_3$ Molar Ratio | Product | Yield(%) | $\overline{MW}$ | Ceramic Yield by TGA, % |
|---|---|---|---|---|---|
| Coammonolysis in $Et_2O$ | 6 | oil | 74 | 390 | 33 |
| | 3 | oil | 79 | 484 | 41 |
| | 1 | wax | 40 | 778 | 72 |
| DHCD Reaction, 1% KH in THF | 6 | solid | 100 | 1300 | 85 |
| | 3 | solid | 99 | 1250 | 88 |
| | 1 | solid | 93 | 1630 | 87 |

TABLE 2

COAMMONOLYSIS OF METHYLDICHLOROSILANE AND TRICHLOROSILANE IN THF MEDIUM. DEHYDROCYCLODIMERIZATION OF THE PRODUCTS.

| Reaction | $CH_3SiHCl_2$ / $HSiCl_3$ Molar Ratio | Product | Yield(%) | $\overline{MW}$ | Ceramic Yield by TGA,% |
|---|---|---|---|---|---|
| Coammonolysis in THF | 6 | oil | 91 | 401 | 28 |
| | 3 | oil | 85 | 482 | 67 |
| | 1 | wax | 94 | 764 | 78 |
| DHCD Reaction, 1% KH in THF | 6 | solid | 96 | 1094 | 82 |
| | 3 | solid | 97 | 942 | 82 |
| | 1 | solid | 93 | 1620 | 86 |

The integrated proton NMR spectra of the various coammonolysis products establish their approximate constitutions:

| $CH_3SiHCl_2/HSiCl_3$ ratio | Approximate Formula |
|---|---|
| 6:1 | $[CH_3SiHNH]_{1.0}[HSi(NH)_{1.5}]_{0.17}$ |
| 3:1 | $[CH_3SiHNH]_{1.0}[HSi(NH)_{1.5}]_{0.33}$ |
| 1:1 | $[CH_3SiHNH]_{1.0}[HSi(NH)_{1.5}]_{0.37}$ |

These formulas carry no structural implications, they merely are average formulations. The $HSiCl_3$ component probably introduces both

$$\gtrdot SiNHSi \lessdot$$

bridging and

$$\gtrdot SiNH_2$$

terminal groups into the structure. From these approximate formulas one can calculate expected % C, H, N and Si compositions and, in general, the agreement of observed % C, H and N for the 6:1 and 3:1 products with these values is good (± 0.55%). (Analyses were not obtained of the waxes prepared in the 1:1 reactions).

The pyrolysis of these coammonolysis products was studied. The 6 $CH_3SiHCl_2$:1 $HSiCl_3$ ammonolysis product gives low ceramic yields on pyrolysis. Pyrolysis of the 3:1 products gives increased ceramic yields, while pyrolysis of the most highly cross-linked 1:1 ammonolysis products gives quite good ceramic yield* 72% for the product prepared in $Et_2O$, 78% for that prepared in THF.

---

*Ceramic yield is defined as

$$\frac{\text{weight of residue}}{\text{weight of sample pyrolyzed}} \times 100$$

---

Subjecting these coammonolysis products to the DHCD reaction, using KH as a base resulted in white solids in virtually quantitative yield. The solids are easier to handle and store than the oils. Pyrolysis of the white solids obtained in these KH-catalyzed DHCD reactions (under argon from 50-950°C) produced black ceramic residues, with the exception of the 1:1 THF ammonolysis-derived solid which left a brown residue. The ceramic yields were excellent (all greater than or equal to 82%, with the highest being 88%).

Analysis of bulk samples of the ceramic materials produced in the pyrolysis of the various KH-catalyzed DHCD products shows that a higher $Si_3N_4$/SiC ratio has been achieved (Table 3): for the 1:1 coammonolysis products-derived polymers, 86% $Si_3N_4$, 8% SiC and 5% C (THF coammonolysis) and 83% $Si_3N_4$, 11% SiC and 6% C ($Et_2O$ coammonolysis); for the 3:1 and 6:1 coammonolysis products-derived polymers: 77% $Si_3N_4$, 18-19% SiC and 4-5% C ($Et_2O$ coammonolysis) and 74% $Si_3N_4$, 20% SiC and 5-6% C (THF coammonolysis).

However, the KH-catalyzed DHCD reactions with the 1:3 coammonolysis-derived polymer were slow, producing soluble products in poor yields. Pyrolysis of this material produced a black ceramic.

There are situations where one desires a ceramic material and/or preceramic polymer that contains differing amounts of silicon carbide and silicon nitride. The present process can be used to result in a preceramic polymer that will typically produce a ceramic material that is enriched in silicon nitride when compared to reactions in which the precursor dihalosilane is used alone as the initial starting material.

For example, when $R^1$ was $CH_3$, X was Cl, and R was $CH_3$, $CH_2$=CH or $C_2H_5$, the following results were obtained.

As control experiments, the ammonolysis of $CH_3SiCl_3$ alone was studied. Ammonolysis of this precursor in $Et_2O$ gave a 46% yield of soluble solid product, molecular weight 702 g/mol, ceramic yield (by TGA to 950°C) 56%. A similar $CH_3SiCl_3/NH_3$ reaction in THF gave soluble solid product in 82% yield, molecular weight 672 g/mol, ceramic yield (by TGA) 69%. By proton NMR ($C\underline{H}_3Si/N\underline{H}$ integration), the $Et_2O$ product may be formulated as $[CH_3Si(NH)_{1.3}]_x$, the THF product as " $[CH_3Si(NH)_{1.6}]_x$. (This is only a rough approximation because integration of the broad $N\underline{H}$ signals is rather inaccurate). The results of the coammonolyses of

TABLE 3

PRODUCTS OF THE REACTIONS IN TABLES 1 AND 2

| $CH_3SiHCl_2$/ $HSiCl_3$ Molar Ratio | Product | C,% | H,% | N,% | Si,% |
|---|---|---|---|---|---|
| | of ammonolysis in $Et_2O$ | 17.75 | 7.53 | 25.80 | |
| 6 | of DHCD | 20.05 | 6.73 | 25.82 | |
| | ceramic[a] | 10.36 | | 30.94 | 58.92 |
| | of ammonolysis in $Et_2O$ | 16.19 | 7.31 | 27.04 | |
| 3 | of DHCD | 17.61 | 6.46 | 25.85 | |
| | ceramic[b] | 9.35 | | 30.79 | 59.99 |
| 1 | of DHCD | 14.10 | 6.12 | 27.60 | |
| | ceramic[c] | 9.10 | 0.70 | 32.56 | 56.52 |
| | of ammonolysis in THF | 18.22 | 7.89 | 25.21 | |
| 6 | of DHCD | 19.89 | 6.85 | 25.08 | |
| | ceramic[d] | 11.72 | | 29.71 | 59.03 |
| | of ammonolysis in THF | 16.10 | 7.45 | 25.51 | |
| 3 | of DHCD | 18.00 | 6.71 | 27.32 | |
| | ceramic[e] | 11.21 | | 29.77 | 59.09 |
| 1 | of DHCD | 12.42 | 5.97 | | |
| | ceramic[f] | 7.74 | 0.54 | 34.29 | 57.17 |

[a] Calc. 77% (by weight) $Si_3N_4$, 18% SiC, 5% C
[b] Calc. 77% $Si_3N_4$, 19% SiC, 4% C
[c] Calc. 83% $Si_3N_4$, 11% SiC, 5.7% C
[d] Calc. 74% $Si_3N_4$, 20% SiC, 6% C
[e] Calc. 74% $Si_3N_4$, 20% SiC, 5% C
[f] Calc. 87% $Si_3N_4$, 8% SiC, 5.4% C

$CH_3SiHCl_2$ and $CH_3SiCl_3$ are given in Tables 4 and 5. In all cases, whether the solvent was $Et_2O$ or THF, oils were obtained in high yield. These were of low (300-500) molecular weight and their pyrolysis gave only low ceramic yields. The KH-catalyzed DHCD reaction of these coammonolysis products gave white solid products of higher (ca. two-to-threefold) molecular weight.

Based upon the $^1$H NMR analysis, the following formulations of the products were generated:
$CH_3SiHCl_2$/
$CH_3SiCl_3$ Reaction

| Molar Ratio | Solvent | Formula |
|---|---|---|
| 6 | $Et_2O$ | $[CH_3SiHNH]_{1.0}[CH_3Si(NH)_{1.5}]_{0.26}$ |
| | THF | $[CH_3SiHNH]_{1.0}[CH_3Si(NH)_{2.1}]_{0.27}$ |
| 3 | $Et_2O$ | $[CH_3SiHNH]_{1.0}[CH_3Si(NH)_{1.1}]_{0.29}$ |
| | THF | $[CH_3SiHNH]_{1.0}[CH_3Si(NH)_{1.1}]_{0.29}$ |
| 1 | $Et_2O$ | $[CH_3SiHNH]_{1.0}[CH_3Si(NH)_{1.5}]_{0.63}$ |
| | THF | $[CH_3SiHNH]_{1.0}[CH_3Si(NH)_{1.8}]_{0.80}$ |

These are only approximate constitutions, but agreement of combustion analyses (C, H, N) was fairly good for the formulations given. The ceramic yields obtained on pyrolysis of these polymers were high: 78-82% for the products generated by initial coammonolysis in THF. In all cases, a black ceramic residue resulted when the pyrolysis to 950°C was carried out in a stream of argon. As expected, the carbon content (in the form of SiC and free C) was higher than that of the $CH_3SiHCl_2$/$HSiCl_3$-derived ceramics (Table 6): 12-18% SiC, up to 9.5% carbon. Nonetheless, higher $Si_3N_4$ contents than those obtained when $CH_3SiHCl_2$ is used alone (67%) were obtained.

DHCD products of polysilazanes from ammonolysis in $Et_2O$:
75-76% $Si_3N_4$; 15-18% SiC; 7-9% C.

TABLE 4

COAMMONOLYSIS OF METHYLDICHLOROSILANE AND METHYLTRICHLOROSILANE IN DIETHYL ETHER AND DEHYDROCYCLODIMERIZATION OF THE PRODUCTS

| Reaction | $CH_3SiHCl_2/CH_3SiCl_3$ Molar Ratio | Product | Yield(%) | $\overline{MW}$ | Ceramic Yield by TGA, % |
|---|---|---|---|---|---|
| Coammonolysis in $Et_2O$ | 6 | oil | 75 | 376 | 21 |
| | 3 | oil | 80 | 373 | 40 |
| | 1 | oil | 81 | 526 | 44 |
| | 1/3 | wax | 89 | 627 | -- |
| | 1/6 | white solid | 65 | 642 | -- |
| DHCD Reaction, 1% KH in THF | 6 | solid | 97 | 1260 | 82 |
| | 3 | solid | 100 | 795 | 78 |
| | 1 | solid | 98 | 786 | 78 |
| | 1/3 | white solid | 95 | 850 | 58 |
| | 1/6 | white solid | 90 | 1012 | 56 |

TABLE 5

COAMMONOLYSIS OF METHYLDICHLOROSILANE AND METHYLTRICHLOROSILANE IN THF AND DEHYDROCYCLODIMERIZATION OF THE PRODUCTS

| Reaction | $CH_3SiHCl_2/CH_3SiCl_3$ Molar Ratio | Product | Yield(%) | MW | Ceramic Yield by TGA,% |
|---|---|---|---|---|---|
| Coammonolysis in THF | 6 | oil | 81 | 311 | 26 |
| | 3 | oil | 91 | 363 | 31 |
| | 1 | oil | 89 | 484 | 44 |
| | 1/3 | white solid | 88 | --- | -- |
| | 1/6 | white solid | 98 | --- | -- |
| DHCD Reaction, 1% KH in THF | 6 | solid | 72 | 1171 | 86 |
| | 3 | solid | 84 | 1170 | 83 |
| | 1 | solid | 100 | 838 | 82 |
| | 1/3 | white solid | 92 | 1180 | 76 |
| | 1/6 | white solid | 95 | 925 | 71 |

TABLE 6

PRODUCTS OF THE REACTIONS OF TABLES 4 AND 5.

| $CH_3SiHCl_2$/ $CH_3SiCl_3$ Molar Ratio | Product | Analysis C,% | H,% | N,% | Si,% |
|---|---|---|---|---|---|
| 6 | of ammonolysis in $Et_2O$ | 20.24 | 8.02 | | |
| | of DHCD | 21.85 | 7.09 | | |
| | ceramic[a] | 12.16 | 0.51 | 30.44 | 57.23 |
| 3 | of ammonolysis in $Et_2O$ | 20.01 | 7.90 | | |
| | of DHCD | 21.67 | 7.26 | | |
| | ceramic[b] | 13.04 | 0.72 | 31.05 | 55.30 |
| 1 | of ammonolysis in $Et_2O$ | 19.66 | 7.49 | | |
| | of DHCD | 21.04 | 7.29 | 22.20 | |
| | ceramic[c] | 11.36 | 0.61 | 31.90 | 56.35 |
| 6 | of ammonolysis in THF | 20.26 | 8.06 | 23.79 | |
| | of DHCD | 21.85 | 7.02 | | |
| | ceramic[d] | 12.87 | 0.60 | 29.35 | 53.94 |
| 3 | of ammonolysis in THF | 20.13 | 7.93 | | |
| | of DHCD | 22.05 | 7.03 | | |
| | ceramic[e] | 12.36 | 0.63 | 29.57 | 56.77 |

| | | | | | |
|---|---|---|---|---|---|
| | of ammonolysis in THF | 19.53 | 7.42 | | |
| 1 | of DHCD | 22.35 | 7.24 | | |
| | ceramic[f] | 11.19 | 0.63 | 31.01 | 56.36 |

[a]Calcd. 76% (by weight) $Si_3N_4$, 16% SiC, 7% C
[b]Calcd. 78% $Si_3N_4$, 12% SiC, 9% C
[c]Calcd. 80% $Si_3N_4$, 12% SiC, 8% C
[d]Calcd. 76% $Si_3N_4$, 15% SiC, 9% C
[e]Calcd. 75% $Si_3N_4$, 18% SiC, 7% C
[f]Calcd. 79% $Si_3N_4$, 14% SiC, 7% C

Changing the "monomer" ratio from 6 to 3 to 1 does not vary the compositions of the final ceramic materials very much: the $Si_3N_4$ content varies by only 5%, while the SiC content shows a 6% range and the carbon content is within 2% for all the materials.

To produce a ceramic material containing only $Si_3N_4$, the white solid polysilazane derived from the DHCD of the oil obtained by ammonolysis of 6:1 $CH_3SiHCl_2/CH_3SiCl_3$ in $Et_2O$ medium was pyrolyzed in a stream of ammonia (to 1000°C). A white ceramic residue containing only 0.36% by weight C resulted.

Essentially the same reactions were carried out using vinyltrichlorosilane in place of methyltrichlorosilane ($CH_3SiHCl_2/CH_2{=}CHSiCl_3$ molar ratios of 6, 3 and 1; ammonolysis in $Et_2O$ and THF medium; subsequent KH-catalyzed DHCD in THF: see Tables 7, 8, and 9). Control experiments involving the ammonolysis of $CH_2{=}CHSiCl_3$ alone, in $Et_2O$ and in THF medium, were also performed. In both solvents, glassy white solids were obtained. The yield of soluble products in $Et_2O$ was low (61%); in THF it was quantitative. The molecular weights were relatively high (1165 and 1185, respectively) and the ceramic yields obtained on pyrolysis to 950°C were high (76% and 82%, respectively). This is a result, at least in part, of a greater incorporation of carbon. Analysis of the ceramic obtained in the pyrolysis of the $CH_2{=}CHSiCl_3$ ammonolysis (in THF) product showed a composition 71% $Si_3N_4$, 29% C.

The coammonolysis of $CH_3SiHCl_2$ and $CH_2{=}CHSiCl_3$

TABLE 7

COAMMONOLYSIS OF METHYLDICHLOROSILANE AND VINYLTRICHLOROSILANE IN DIETHYL ETHER. DEHYDROCYCLODIMERIZATION OF THE PRODUCTS

| Reaction | $CH_3SiHCl_2$/$CH_2$=$CHSiCl_3$ Molar Ratio | Product | Yield(%) | $\overline{MW}$ | Ceramic Yield by TGA,% |
|---|---|---|---|---|---|
| Coammonolysis in $Et_2O$ | 6 | oil | 86 | 305 | 43 |
| | 3 | oil | 87 | 333 | 53 |
| | 1 | oil | 90 | 605 | 74 |
| DHCD Reaction, 1% KH in THF | 6 | solid | 99 | 880 | 83 |
| | 3 | solid | 98 | 999 | 84 |
| | 1 | solid | 98 | 970 | 78 |

TABLE 8

COAMMONOLYSIS OF METHYLDICHLOROSILANE AND VINYLTRICHLOROSILANE IN THF. DEHYDROCYCLODIMERIZATION OF THE PRODUCTS

| Reaction | $CH_3SiHCl_2$/$CH_2$=$CHSiCl_3$ Molar Ratio | Product | Yield(%) | $\overline{MW}$ | Ceramic Yield by TGA,% |
|---|---|---|---|---|---|
| Coammonolysis in THF | 6 | oil | 89 | 350 | 47 |
| | 3 | oil | 92 | 361 | 57 |
| | 1 | oil | 94 | 536 | 74 |
| DHCD Reaction, 1% KH in THF | 6 | solid | 88 | 773 | 84 |
| | 3 | solid | 100 | 716 | 78 |
| | 1 | solid | 99 | 777 | 85 |

TABLE 9

PRODUCTS OF THE REACTIONS OF TABLES 7 AND 8

| $CH_3SiHCl_2$/ $CH_2$=$CHSiCl_3$ Molar Ratio | Product | Analysis C% | H% | N% | Si% |
|---|---|---|---|---|---|
| 6 | of ammonolysis in $Et_2O$ | 22.80 | 7.86 | 23.91 | |
| | of DHCD reaction | 24.48 | 6.86 | 23.51 | |
| | ceramic[a] | 17.06 | | 28.33 | 54.62 |
| 3 | of ammonolysis in $Et_2O$ | 24.39 | 7.65 | 24.59 | |
| | of DHCD reaction | 26.21 | 6.89 | 23.31 | |
| | ceramic[b] | 17.21 | | 28.43 | 54.91 |
| 1 | of ammonolysis in $Et_2O$ | 26.83 | 7.08 | 24.73 | |
| | of DHCD reaction | 27.66 | 6.48 | 25.14 | |
| | ceramic[c] | 20.87 | | 29.09 | 49.85 |

[a]Calcd. 71% (by weight) $Si_3N_4$, 17% SiC, 12% C
[b]Calcd. 71% $Si_3N_4$, 17% SiC, 12% C
[c]Calcd. 73% $Si_3N_4$, 9% SiC, 18% C
[d]Calcd. 69% $Si_3N_4$, 19% SiC, 12% C
[e]Calcd. 70% $Si_3N_4$, 16% SiC, 13% C
[f]Calcd. 71% $Si_3N_4$, 11% SiC, 18% C

in $Et_2O$ and in THF medium gave polysilazane oils in high yield, molecular weights 300-600 g/mol. Pyrolysis of the coammonolysis products gave higher ceramic yields, the higher the $CH_2$=$HSiCl_3$ content in the chlorosilane mixture. Application of the KH-catalyzed DHCD reaction to the ammonolysis products in all cases gave white solids of higher molecular weight whose pyrolysis to 950°C gave high (78-85%) ceramic yields. However, their $Si_3N_4$ content was lower and their carbon content (as SiC + free C) was higher than observed in the ceramics from the $CH_3SiHCl_2/HSiCl_3$ and $CH_3SiHCl_2/CH_3SiCl_3$ systems: For the $CH_3SiHCl_2/CH_2$=$CHSiCl_3$ ratio = 6 and 3 products: 69-71% $Si_3N_4$; 16-19% SiC; 12-13% C. For the 1:1 products: 71-73% $Si_3N_4$; 9-11% SiC; 18% C.

A mixture of $CH_3SiHCl_2$ and $C_2H_5SiCl_3$ (3:1 molar ratio) was treated with ammonia in $Et_2O$ and in THF at 0°C. In both cases, silazane oils, MW 360-370, were obtained in high yield. Their ceramic yields on pyrolysis to 950°C were low (15% and 23%, respectively). Application of the DHCD reaction (1% KH in THF) to these oils in both cases gave white solids with increased MW (972 and 860, respectively) and increased ceramic yield on pyrolysis to 950°C (81% and 78%, respectively). The pyrolysis product in each case was a black foam when the pyrolysis gas stream was argon. Analysis of the ceramic products gave % C, N and Si values from which compositions of about 71-73% $Si_3N_4$, 14-17% SiC and 11-12% C could be calculated. Thus, there is essentially no difference between these results and the calculated composition of the ceramic product of the corresponding 3:1 $CH_3SiHCl_2/CH_2$=$CHSiCl_3$ system (70-71% $Si_3N_4$, 16-17% SiC, 12-13% C).

In the case of the present polymers, as is seen in Table 10, some were self-curing and on pyrolysis gave ceramic fibers (those noted "yes"). Others melted when heated, so that the fibers were destroyed (those noted

"no"). Conversion of the meltable fiber to an infusible fiber by a cure step prior to pyrolysis will enable one to melt spin these materials into fibers.

TABLE 10

CERAMIC FIBERS AND SiC POWDER COMPOSITES

| Chlorosilanes | Molar Ratio | Ammonolysis Solvent | Bar | Fiber on Pyrolysis[a] |
|---|---|---|---|---|
| $CH_3SiHCl_2$/ $CH_2$=$SiCl_3$ | 6/1 | $Et_2O$ | x[b] | Yes |
| " | 3/1 | $Et_2O$ | x | No |
| " | 1/1 | $Et_2O$ | x | No |
| " | 6/1 | THF | x | Yes |
| " | 3/1 | THF | x | No |
| " | 1/1 | THF | x | Yes |
| $CH_3SiHCl_2$/ $HSiCl_3$ | 6/1 | $Et_2O$ | x | Yes |
| " | 3/1 | $Et_2O$ | x | Yes |
| " | 1/1 | $Et_2O$ | x | Yes |
| " | 6/1 | THF | x | No |
| " | 3/1 | THF | x | No |
| " | 1/1 | THF | x | Yes |
| $CH_3SiHCl_2$/ $CH_3SiCl_3$ | 6/1 | $Et_2O$ | x | Yes |
| " | 3/1 | $Et_2O$ | x | No |
| " | 1/1 | $Et_2O$ | x | No |
| " | 6/1 | THF | x | Yes |
| " | 3/1 | THF | x | No |
| " | 1/1 | THF | x | Yes |

a Yes - Fibers remained after heating to 1000°C under Ar.
No - Fibers did not remain after pyrolysis to 1000°C.

b x means a bar was made and pyrolyzed to obtain a ceramic bar.

The "cure" step prior to pyrolysis can be accomplished when either R or $R^1$ is alkenyl by curing the fiber through hydrosilylation. This reaction can be induced by ultraviolet and other high energy radiation, as well as

by chemical free radical sources and transition metal catalysts. These compounds can readily be selected by the person of ordinary skill in the art and include $H_3PtCl_6 \cdot 6H_2O$, peroxide and azo compounds, preferably organic peroxides, such as benzoyl peroxide, more preferably azo compounds such as azobisisobutyronitrile and the like. Preferably, a radiation source is used.

UV irradiation, irradiation with an electron beam or an X-ray source, etc. will cure the alkenyl containing polymer. Subjecting the preceramic fiber to UV irradiation (Rayonet Reactor) for 2 hours results in an infusible fiber that does not melt upon subsequent pyrolysis under argon, producing ceramic fibers. By incorporating C=C into the coammonolysis product, this strategy can be broadly applied to the present invention. The addition of a third compound containing an unsaturated functionality to the ammonolysis mixture results in a mixture of oligomers. The particular amount to be added to the coammonolysis mixture will depend upon the desired use and compounds being used.

Fibers were prepared in the following manner: In the dry box, a few drops of toluene was added to a polymer sample and the resulting mixture stirred with a glass rod until a sticky residue resulted from which fibers could be drawn. These fibers (1/4" to 2" in length) were placed in a boat, taken out of the dry box and placed in a tube furnace flushed with Argon. The fibers were heated to 1000°C at 10°C/minute. The polymers listed in Table 10 were used in preparing fibers.

The present polymers can be used as binders for SiC powder processing.

Ceramic composite bars were prepared in the following manner:

In the dry box, a 100 ml, one-necked, round-bottomed flask was charged with 0.6 g polymer and 2.4 g of commercial Fujima SiC powder. The flask was removed from the dry box and charged with 25 ml of toluene. The flask was placed in an ultrasonic bath for at least 15 minutes. The toluene was then removed on a rotary evaporator and the residue then dried under vacuum at 0.03 mm Hg for at least 1/2 hour. The SiC/polymer residue was ground with a mortar and pestle to produce a fine powder. This powder was pressed in a 1.5" x 0.5" x 0.1" die at 6000 lbs. for 5 minutes. The bar was then isostatically pressed at 40,000 lbs. Finally, the bar was pyrolyzed under Ar in a tube furnace to 1000°C.

The polymers shown in Table 10 were used to form , composite bars. All bars retained their rectangular shape upon pyrolysis.

In a different embodiment, the polymeric silylamide which is the intermediate formed from the DHCD reaction of $[R^1SiHX_2]$ and $[R^2SiX_3]$ (wherein $R^1$, $R^2$ and X are as defined above) can be used to form another preceramic polymer. This polymeric silylamide is the intermediate formed after the DHCD reaction and prior to treatment with an electrophile, such as $Ch_2I$. This intermediate species (sometimes also referred to as a "reactive 'living' polymer", silylamide, poly(silylamide) or alkali metal silylamide)") can react with electrophiles other than $CH_3I$. We have discovered that the reaction of this silyamide with an organosilicon polymer containing Si-H repeat units (referred to as an Si-H containing organosilicon polymer) results in novel preceramic polymers.

The Si-H containing organosilicon polymer is preferably a polysilane compound of the formula $[(RSiH)_x(RSi)_y]_n$, (where x + y = 1, n is an integer greater than 1, R is a lower alkyl group having from 1 to about 6 carbon atoms, a substituted or unsubstituted lower alkenyl group having from 2 to about 6 carbon atoms, a substituted or unsubstituted lower aryl group having from 6 to about 10 carbon atoms, or a tri(lower)alkyl- or di(lower)alkylsilyl group) (See U.S. patent Application Serial No. 756,353 filed July 18, 1985), a polycarbosilane polymer containing repeat units of the formula $[R^aSi(H)-(CH_2)_q]$,i.e.,

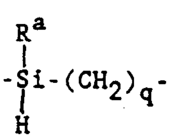

(II)

(where q is an integer i or greater, $R^a$ is H, a lower alkyl group having from 1 to about 6 carbon atoms, a cycloalkyl group having from 3 to about 6 carbon atoms, a substituted or unsubstituted lower alkenyl group having from 2 to about 6 carbon atoms or a substituted or unsubstituted lower aryl group having from 6 to about 10 carbon atoms) (See U.S. Patent Application serial No. 781,934 filed September 30, 1985), or an organohydrogensiloxane polymer containing repeat units of the formula $[R^bSi(H)O]_n$,i.e.,

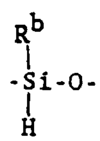

(III)

(where n is an integer 1 or greater, $R^b$ is a lower alkyl group having from 1 to about 6 carbon atoms, a cycloalkyl group having from 3 to about 6 carbon atoms, a substituted or unsubstituted lower alkenyl group having from 2 to about 6 carbon atoms or a substituted or unsubstituted lower aryl group having from 6 to about 10 carbon atoms) (See U.S. Patent Application Serial No. 849,390 filed April 8, 1986).

In accord with the present invention, treatment of, for example, organopolysilanes with the silylamide will provide higher molecular weight preceramic materials and improve the ceramic yield.

We have now found that organopolysilanes such as methylpolysilanes ($[(CH_3SiH)_x(CH_3Si)_y]_n$) obtained in the above reactions, upon treatment with catalytic quantities of silylamides in accord with the present invention, yield preceramic polymers of higher molecular weight which upon pyrolysis give significantly higher ceramic yields. Such polymers, when prepared as described herein, are soluble in organic solvents.

Polycarbosilane polymers that are used in the present invention preferably contain a multiplicity of repeat units of the formula $[R^aSi(H)\text{-}(CH_2)_q]$ (where q and $R^a$ are as defined above)(hereinafter polymers containing such repeat units are referred to as "polycarbosilanes"). The reaction of these polycarbosilanes with an alkali metalsilylamide results in novel preceramic polymers. Typically, the pyrolysis of this new polymer gives a black ceramic solid in a yield that is greater than that obtained on pyrolysis of the parent polycarbosilane.

The polycarbosilane polymer should contain at least 25 mole % of repeat units of the formula II, i.e. $[R^aSi(H)\text{-}(CH_2)_q]$, in addition to other repeat units, such as $[R^a_2Si(CH_2)_q]$ (e.g. the Yajima polymers). Preferably the polycarbosilane polymer contains at least 35 mole % of repeat units of formula II. More preferably, the polymer contains at least 50 mole % repeat units of formula II.

The polymer may also contain a mixture of repeat units of the above described formula, e.g., both $[R^aSi(H)\text{-}(CH_2)_q]$ and $[R^{a'}Si(H)\text{-}(CH_2)_{q'}]$ ($R^{a'}$ and q' are defined the same as $R^a$ and q, respectively, but $R^{a'}$ may be different than $R^a$ and q' may be different than q). $R^a$ is preferably a lower alkyl group, more preferably $R^a$ is $CH_3$. Preferably q is equal to 1 - 3, more preferably it is equal to one.

The polycarbosilane and silylamide are typically added in a weight ratio of polycarbosilane: silylamide of about 10:1 or less. Preferably this ratio is about 5:1 or less. More preferably the ratio is about 3:1 or less. Most preferably the ratio is about 1:1.

Additionally, the reaction of organohydrogensiloxane polymers containing a plurality of repeat units of the formula $[R^bSi(H)O]_n$ (where n and $R^b$ are as defined above) (hereinafter polymers containing such repeat units are referred to as "polysiloxanes"), with a poly(silylamide) also results in a novel preceramic polymer.

The pyrolysis of this new preceramic polymer under a stream of ammonia typically results in a high yield of a white ceramic material. By choosing the correct stoichiometry one is readily able to obtain a ceramic material that is virtually only silicon oxynitride. This process provides silicon oxynitrides at high yield and at low costs. The pyrolysis of the preceramic polymer of the present invention under an inert atmosphere such as nitrogen or argon typically results in a black ceramic solid in high yield. This black ceramic material generally contains SiC, $Si_3N_4$ and $SiO_2$ and can be used as a binder or coating.

The polysiloxane polymer used in the present invention can be readily obtained by the hydrolysis of the appropriate $R^bSiHCl_2$ (where $R^b$ is as defined above). The hydrolysis may be steered to give a high yield of cyclic $[R^bSi(H)O]_n$ oligomer or to produce higher molecular weight linear $[R^bSi(H)O]$ polymers. They yield of cyclic oligomers (n = 4, 5, 6,...) may be maximized by using the method taught by Seyferth, D., Prud'homme, C; and Wiseman, G.H., Inorg. Chem., 22: 2163-2167 (1983). Additionally, one can use commercially available $[R^bSi(H)O]_n$ polymers.

The polysiloxane polymers useful in the present invention encompass polymers having a wide range of $[R^bsi(H)O]$ repeat units. The number of repeat units contained in the polymer will vary depending upon the desired end product.

Preferably, the polysiloxane polymer should contain at least 25 mole % of repeat units of the formula III, i.e. $[R^bSi(H)O]_n$, in addition to other repeat units, for example, $[R^bR^{b'}SiO]$, $[R^{b'}R^{b''}SiO]$, $R^{b'}$ and $R^{b''}$ are defined the same as $R^b$; and $R^b$, $R^{b'}$, and $R^{b''}$ may be the same as or different from each other. More preferably the polysiloxane polymer contains at least 35 mole % of repeat units of formula III. Even more preferably, the polymer contains at least 50 mole % repeat units of formula III. Most preferably, the polymer contains at least 75% mole repeat units of formula III

With respect to the silylamide used, $R^1$ is preferably a lower alkyl group, more preferably $CH_3$, while $R^2$ is preferably H or a lower alkyl group, more preferably H or $CH_3$. X is preferably chlorine, fluorine, bromine or iodine. The dihalosilane can be added to the trihalosilane over a wide range, but preferably the mole ratio of $R^1SiHX_2$:$RSiX_3$ is about 20:1 to 1:20, more preferably it is from about 8:1 to about 1:6, still more preferably about 8:1 to about 1:2, and even more preferably from about 6:1 to about 1:1.

This silylamide when pyrolyzed will typically produce a ceramic material that is richer in silicon nitride than that obtained on pyrolysis of the polysilazane DHCD product obtained from the corresponding dihalosilane alone.

The use of the above polymeric silylamide in one embodiment of the present invention upgrades the Si-H containing organosilicon polymer, for example, the organopolysilanes, the polycarbosilanes and the polysiloxanes to new polymers which give a high ceramic yield on pyrolysis. When this silylamide is reacted with an Si-H containing organosilicon polymer, the reaction product after treatment with a suitable electrophile such as an organic or a silyl halide, incorporates both starting materials. When this reaction product is pyrolyzed,,the ceramic yield is significantly greater than that of the "parent" organosilicon polymer. Additionally, the silicon nitride/silicon carbide ratio of the resulting material can be varied depending upon the particular dihalosilane and trihalosilane, ratio of dihalosilane to trihalosilane and Si-H organosilicon polymer used. The ratios to use to obtain a particular result can be determined empirically by the skilled artisan based upon the present disclosure.

The weight ratio of Si-H containing polymer to polymeric silylamide can vary widely. For example, mole ratios of organopolysilane: polymeric silylamide from about 4:1 to about 1:4, and preferably from 2.5:1 to 1:2 typically provide useful results. Weight ratios of polycarbosilane: polymeric silylamide from about 10 to about 1; and preferably from 5:1 to 1:1 typically provide useful results. Weight ratios of polysiloxane: polymeric silylamide of 1:1 and 1:5 typically provided useful results. Weight ratios of polysiloxane: polymeric silylamide from about 15 to about 1 to about 1 to about 15, should also provide useful results. Preferably the weight ratio of polysiloxane: polymeric silylamide ranges from about 5:1 to 1:5, and more preferably, from 5:1 to 1:1. However, in all three cases other ratios can be used depending on the particular starting materials and their pyrolysis characteristics.

The organosilicon polymers thus formed by reaction of the organosilicon polymer containing Si-H repeat units with the preformed silylamide "living intermediate" followed by treatment with an electrophile, henceforth will be referred to as "graft" polymers.

Polysilanes of type $(RSiH)_n$ (i.e., the general case where y = 0, x = 1) also react with the polymeric silylamides that are the DHCD reaction product of the coammonolysis of a dihalosilane and trihalosilane. Thus, a reaction of $(C_6H_5SiH)_n$ with the silylamide "living intermediate" (1:1 molar ratio) in THF at room temperature gives a new organosilicon polymer which is an effective ceramic precursor, giving a $Si_3N_4$/SiC/C ceramic product in high yield upon pyrolysis to 1000°C.

Additionally, use of the reaction product of organopolysilanes or polycarbosilanes with the polymeric silylamide results in a product that is self-curing as the temperature is raised in the production of ceramic material. Consequently, with these polymers it is possible to avoid the formation of $SiO_2$ which results when an oxidative cure step is used. This again is an improvement over pyrolysis of the precursor silane compound alone.

In this system, R or $R^a$ is preferably a lower alkyl, more preferably, R or $R^a$ is $CH_3$. However, R or $R^a$ need not be the same and, as aforesaid, mixtures of Si-H containing organosilicon compounds and/or repeat units, e.g., $[(RSiH)_x(RSi)_y]_n$ and $[(R''SiH)_{x'}(R''Si)_{y'}]_{n'}$, $[R^aSi(H)\text{-}(CH_2)_q]$ and $[R^a Si(H)\text{-}(CH_2)_{q}']$, and $[(RSiH)_x(RSi)_y]_n$ and $[R^aSi(H)\text{-}(CH_2)_q]$ can be used to obtain further flexibility in tailoring the properties of the aforesaid product. Similarly, mixed polymers of the type $[(RSiH)_a(RSi)_b(RR'Si)_c]_m$(where a, b, c, m and R are as defined above, and R′ is defined as is R above and R′ may be the same or different than R) can be used as well. Preferably, at least one of the grouping R, R′, $R^a$, and $R^{a'}$ for each mixture is $CH_3$.

The polysiloxane polymer may also contain a mixture of repeat units of the above described formula, e.g., both $[R^bSi(H)O]$ and $[R^{b'} Si(H)O]$ ($R^{b'}$ is defined the same as $R^b$ but $R^{b'}$ may be different than $R^b$). $R^b$ is preferably a lower alkyl group, more preferably $R^b$ is $CH_3$. Further, these aforesaid mixtures of compounds can be used to obtain additional flexibility in tailoring the properties of the aforesaid product.

Mixtures of polysilazanes, for example where $R^2$ is H and $R^{2'}$ is $CH_3$ also may be used.

As indicated above, this invention also includes the case of $[(RSiH)_x(RSi)_y]_n$, where x=1, y=0, with R as defined above. Thus, $[(RSiH)]_n$ may be a linear or a mixture of cyclic species, or a hybrid of both types. For example, $[PhSiH]_n$ (Ph is a phenyl group), cf, Aitken, C. et al., J. Organomet. Chem., 279 :C11-C13 (1985), reacts in the same way as the above-described organopolysilanes to provide new organopolysilane/organopolysilazane hybrid polymers. These mixtures will be particularly useful in attempts to avoid excess free silicon or carbon. Similarly, aryl-substituted repeat units of either $[R^aSi(H)\text{-}(CH_2)_q]$ or $[R^bSi(H)O]$, for example, where $R^a$ or $R^b$ is a phenyl or substituted phenyl group, and $R^a$ and $R^b$ can be a lower aryl group is also included.

The preceramic product one obtains by using these silylamides, even in only catalytic amounts, differs from the starting organosilicon compound. This difference in products apparently arises because both Si-H and Si-Si bonds are reactive towards nucleophilic reagents.

The "graft" polymer is formed by combining the already formed polymeric silylamide with the si-H containing organosilicon polymer, for example, the organopolysilane in varying proportions in an organic solvent. Thereafter, the mixture is stirred at room temperature for sufficient time for the two compounds to react. In one embodiment, the polysiloxane, for example, $[CH_3Si(H)O]_n$ oligomers with a high cyclic content, is added slowly to an organic solution such as THF containing the preformed silylamide. An immediate reaction with some gas evolution occurs. Thereafter, the mixture is stirred at room temperature for sufficient time for the two compounds to more completely react.

Any organic solvent in which both polymer systems are soluble without reaction can be used. Such organic solvents include, for example, THF, diethyl ether, glycol ethers, alkanes, arenes and combinations thereof. The mixture may be heated above room temperature, and can be refluxed to speed up the completion of the reaction. After refluxing, the mixture is quenched with an electrophile, E-$X^1$, to form the organosilicon "graft" polymer. The electrophile can be an alkyl halide, sulfate, or sulfonate; a halosilane; or the like. Typically, $CH_3I$ or a chlorosilane is used, although other equivalent electrophiles well-known to those skilled in the art can also be used. E is preferably a lower alkyl group or silyl group; $X^1$ is preferably a halide, sulfate or sulfonate

The organosilicon polymer formed by the present ("graft") process with the organopolysilane is typically obtained in yields greater than 85% based on weight of the starting materials with a variable molecular weight, typical values being in the 1600-2200 g/mol range. This preceramic organosillcon polymer can then by pyrolyzed under inert atmosphere conditions (As used herein, nitrogen will be considered an inert gas, argon is another example) to result in a ceramic material in high yield. Pyrolysis under nitrogen gave ceramic products in a yield of 75-85%.

The organosilicon preceramic polymers formed by the present ("graft") process when polycarbosilane is used were produced in high yield (as high as 95%). Pyrolysis of this preceramic polymer gave ceramic products in a yield of 75-85% (based on weight of the starting materials).

The resultant preceramic polymer when polysiloxane was used were produced in good yields, typically better than 70%. The polysiloxane-derived preceramic organosilicon polymers can then by pyrolyzed under nitrogen or other inert atmosphere to result in ceramic materials in high yield. Typically, pyrolysis under nitrogen gave black ceramic products in a high yield (as high as 88%). More significantly, pyrolysis under ammonia will give a white ceramic solid in high yield. The white ceramics contain little, if any, carbon.

What is referred to herein as an "in situ" polymer can be obtained by carrying out the DHCD reaction of the dihalosilane and trihalosilane coammolysis product in solution in the presence of the Si-H containing organosilicon polymer. In this method, the organopolysilane or polycarbosilane is added to an organic solvent. Afterwards, the mixture (generated by reacting in solution anhydrous ammonia with the dihalosilane and trihalosilane) is added. The polysiloxane is added to the caommonolysis mixture which is in an organic solvent.

One then adds to the solution a basic catalyst capable of deprotonating the hydrogen from a nitrogen atom adjacent to a silicon atom. See U.S. Patent No. 4,482,669. The reaction mixture gradually changes color and hydrogen is evolved. The resulting solution is then stirred at room temperature for sufficient time for the silylamide intermediates and the Si-H containing organosilicon polymer to react. It can be heated above room temperature, and can be heated at reflux to speed the completion of the reaction. Afterwards, the reaction mixture is allowed to cool to room temperature, if required, and quenched with an electrophile such as $CH_3I$ or a halosilane, such as a chlorosilane, to produce the organosilicon "in situ" polymer. The molecular weight of the "in situ" polymer is variable. On pyrolysis this material provides a high yield of a black ceramic material.

On pyrolysis the polycarbosilane-derived material provides a yield of a black ceramic material, that is typically greater than that obtained on pyrolysis of the polycarbosilane alone.

On pyrolysis under nitrogen or argon the polysiloxane-derived material provides a yield of a black ceramic material, that is typically greater than that obtained on pyrolysis of the polysiloxane alone. Pyrolysis under ammonia typically results in silicon oxynitrides in high yields.

The organosilicon polymer formed by either of the above "graft" or "in situ" methods usually is separated from solution. The solvent is removed by using techniques well known to a person of ordinary skill in the art. One standard method is distillation, preferably trap-to-trap distillation. The polymer, typically a white powder that is soluble in an organic solvent, is thereby obtained. One may also combine trap-to-trap distillation with centrifuging, followed by trap-to-trap distillation to separate the polymer from solution.

The "in situ" preceramic polymer differs physically from the "graft" preceramic polymer. Major differences will be observed in their proton NMR spectra and in the form of their thermogravimetric analysis (TGA) curves. Both types of polymers are useful as preceramic materials.

The use of coammonolysis-derived, DHCD-catalyzed silylamide described herein not only improves the ceramic yield of the organopolysilanes, but, more significantly, when this silylamide is reacted with organopolysilane of the formula $[(RSiH)_x(RSi)_y]_n$ in the appropriate stoichiometry, the reaction product of $[(RSiH)_x(RSi)_y]_n$ and the "living intermediate" silylamide after treatment with a suitable electrophile such as an organic or a silyl halide, incorporates both starting materials. When this reaction product is pyrolyzed, the excess silicon normally obtained in the pyrolysis of the organopolysilane alone and the excess carbon normally obtained in the pyrolysis of the quenched polymeric silylamide alone combine so that there is no substantial

excess of either element in the ceramic product. Consequently, one can obtain a ceramic material preferably with less than about 1% free silicon or free carbon, more preferably less than about 0.5% free carbon and less than 0.5% free silicon, and most preferably with less than about 0.1% of free silicon and less than about 0.1% of free carbon, i.e., a ceramic material containing substantially no free carbon and no free silicon. The exact combination of the two compound necessary to result in the desired stoichiometry can readily be calculated by a person of ordinary skill in the art on the basis of the results of the analyses of the ceramic products obtained in the pyrolysis of the separate polymers. Mole ratios of organopolysilane: metal silylamide from about 4:1 to about 1:4, and preferably from 2.5:1 to 1:2 should provide useful results. However, other ratios can be used depending on the particular starting materials and their pyrolysis characteristics.

The excess of free carbon, which can be a problem with the starting polycarbosilanes, can be dealt with by using a ternary system of: (1) the polycarbosilane; (2) the polysilazane (as the polymeric silylamide, either preformed or generated in situ) and (3) a polysilane whose pyrolysis alone gives a ceramic product which contains an excess of silicon. Examples of such polysilanes are organopolysilanes as described above, for example, those which are produced by the sodium condensation of methyldichlorosilane. In these reactions the organopolysilane is preferably as defined above, i.e $[(RSiH)_x(RSi)_y]_n$. More preferably R is a lower alkyl group, most preferably R is $CH_3$. Using an appropriate mixture of the three polymers (which can be calculated from the results of the analyses of the ceramic products of the pyrolysis of each individual polymer, e.g., the $CH_3I$-quenched polymer in the case of the polymeric silylamide), one can obtain a ceramic product which contains a minimal excess of either element, carbon or silicon. Such hybrid ternary preceramic polymers are soluble in organic solvents and, depending on component ratios used, are of variable molecular weight. Their pyrolysis gives black ceramic products in high (generally > 80%) yield.

In the preceramic polymer which results from a combination of a polysiloxane polymer (A) and an alkali metal (poly)silylamide (B), the ratio of Si/O/N of the resultant ceramic material can be broadly varied by adjusting the stoichiometry of the preceramic polymer, i.e the A:B ratio. For example, at one extreme, the pyrolysis of a $CH_3I$-quenched silylamide derived from the coammonolysis of $CH_3SiHCl_2$ and $HSiCl_3$ and subsequent DHCD reaction under a $NH_3$ atmosphere produced white silicon nitride. By appropriate selection of reactant stoichiometry it should be possible to obtain a ceramic product that is virtually pure silicon oxynitride.

For example, it should be possible to obtain distinct crystalline phase $Si_2ON_2$ after pyrolysis under a stream of ammonia from a preceramic polymer one obtains by the in situ process. In this instance the weight ratio of polysiloxane:alkali metal poly(silylamide) is about 1:1 and R and $R^1$ are $CH_3$ and $R^2$ is H or $CH_3$. In the above-described system, deviating from a 1:1 ratio results in a ceramic polymer having some $Si_3N_4$ when you use more poly(silyamide) or some $SiO_2$ when you use more polysiloxane. It is simple to empirically determine the appropriate weight ratio for a desired ceramic product with the use of any of the claimed starting materials.

The polysiloxane and silylamide are typically added in a weight ratio of polysiloxane: silylamide from 15:1 to 1:15. Preferably this ratio is about 5:1 to 1:5. More preferably the ratio is about 3:1 to 1:3. Most preferably the ratio is about 1:1.

Physical blends of Si-H containing organosilicon polymers, for example the organopolysilane, the polycarbosilane polymers containing repeat units of $[R^aSi(H)-(CH_2)_q]$, for example, the Yajima polycarbosilane or the polysiloxane containing repeat units of $[R^bSi(H)O]_n$, with the "quenched" organosilazane polymer of U.S. Patent Application Serial No. 899,471 can be used since these will react when they are heated together. When approximately equal molar quantities of the polymers where R, $R^a$ or $R^b$ = $CH_3$, $R^1$ = $CH_3$, R = H or $CH_3$, are mixed and finely ground together and then subjected to pyrolysis to 1000°C, ceramic yields are obtained which are approximately the average of the ceramic yields when the organopolysilane and the organosilazane polymers are pyrolyzed separately, are significantly higher than that which results when the polycarbosilane is pyrolyzed separately and is still higher than that which results when the polysiloxane is pyrolyzed separately.

When polycarbosilane/organosilazane mixtures are heated, in the absence of a solvent at 200°C under nitrogen, white foamy solids are obtained which are insoluble in nonpolar organic solvents. When organosilane/organosilazane mixtures are heated, either in the absence of a solvent at 100°C under nitrogen or in a toluene solution at reflux, white powders are obtained which are insoluble in nonpolar organic solvents.

Ternary blends of the polycarbosilane, the polysilazane and the $[(CH_3SiH)_x(CH_3Si)_y]_n$ polysilane behave similarly.

The combined polymers obtained by the "graft," "in situ" and physical blend methods can be converted to black ceramic fibers. Pyrolysis of pressed bars of the combined polymers to 1000°C provides a black solid product. In other experiments, silicon carbide powder is dispersed in a toluene solution containing 25% by weight of the combined organosilane/organosilazane polymers. The solvent is evaporated and the residue, a fine powder of silicon carbide with combined polymer binder is pressed into bars and pyrolyzed at 1000°C. A ceramic bar is obtained showing a low weight loss and slightly shrunken size.

Similarly, when silicon carbide powder is dispersed in toluene solutions of the combined polycarbosilane/organosilazane polymers, the solvent evaporated and the residue, a fine powder of silicon carbide with combined polymer binder, is pressed into bars and pyrolyzed at 1000°C, a ceramic bar is obtained showing a low weight loss and slightly shrunken size.

Pyrolysis of bars of the combined polysiloxane-organosilazane polymers under ammonia results in a white rectangular body. Pyrolysis under either pyrolysis condition results in ceramic bars showing low to moderate weight loss and slightly shrunken size.

The invention will be further illustrated by the examles that follow:

I. General

All reactions and manipulations were carried out under a dry nitrogen atmosphere using standard Schlenk techniques or a Vacuum Atmospheres dry box. All solvents were distilled under nitrogen: diethyl ether and tetrahydrofuran from sodium benzophenone ketyl, and hexane from lithium aluminum hydride. Chlorosilanes were obtained from Petrarch Systems, Inc. or Silar Labs., Inc. and were distilled from magnesium filings prior to use. Anhydrous ammonia (Matheson) was dried by passing through a KOH-filled drying tube. Methyl iodide was distilled under nitrogen from $P_2O_5$. Potassium hydride (Alfa) was obtained as a 40% slurry in mineral oil which was filtered, washed with hexane and dried prior to use.

Proton NMR spectra were obtained on either a Jeol FX-90Q (90 MHz) or a Bruker WM-250 (250 MHz) using a $CDCl_3$ reference (7.24 ppm shift). Infrared spectra were obtained on a Perkin-Elmer Model 1430 infrared spectrophotometer.

Molecular weights were determined by cryoscopy in benzene.

Thermogravimetric analysis (TGA) yield were obtained using a Perkin-Elmer TGS-2 system. Samples were heated from 50°C to 950°C under an argon atmosphere at 10°C/min. Large-scale tube furnace pyrolyses to produce gram quantities of ceramics were performed in a Lindberg Model 59344 tube furnace with controller. Samples were heated from 200°C to 1000°C at 10°C/minute in an argon atmosphere. Analyses of all oils and polymers were performed by Scandinavian Microanalytical Labs, Herlev, Denmark. Ceramic analyses were performed by Galbraith Labs, Knoxville, Tennessee

II. Ammonolysis Reactions

A typical reaction is described. All other ammonolyses of the $RSiCl_3$ alone or of mixtures of $CH_3SiHCl_2$ with $RSiCl_3$ (R = H, $CH_3$, $CH_2$=CH) were carried out using the same general procedure. For each $CH_3SiHCl_2/RSiCl_3$ molar ratio used, separate reactions were carried out in $Et_2O$ and in THF medium. The yields of soluble products (soluble in the reaction medium), the molecular weights, the ceramic yields (by TGA under argon) obtained on their pyrolysis and their analyses are given in the appropriate Tables (1-9).

A 1000 ml three-necked, round-bottomed flask equipped with a Dry Ice condenser, an overhead mechanical stirrer and a rubber septum was flame-dried while a stream of dry nitrogen was passed through. Dry diethyl ether (600 ml) was added and then 33.6 g (0.292 mol) of $CH_3SiHCl_2$ and 6.8 g (0.05 mol) of $HSiCl_3$. The solution was cooled to 0°C (ice bath). The original septum was replaced with another septum through which a one-foot gas inlet tube passed. Gaseous ammonia then was bubbled into the solution at a moderate rate for 4.5 hours until ammonia was observed condensing on the -78°C condenser. The ammonia inlet tube was replaced with a rubber septum after the addition of ammonia had been stopped.

The reaction mixture was allowed to warm to room temperature and stirred under nitrogen overnight. Filtration (in the dry box) removed $NH_4Cl$ and any other insoluble products of the reaction. The solids were washed with three 50 ml portions of ether. Trap-to-trap distillation of the solvent (25°C, 0.1 mm Hg) from the combined ether phases left a clear, mobile oil (15.0 g, 74% based on the ($CH_3SiHNH$) and $[HSi(NH)_{1.5}]$ components). The oil was characterized by analysis (Table 3), by IR and $^1H$ NMR spectroscopy. The molecular weight was measured (cryoscopy in benzene) and a thermogravimetric trace was obtained (50-950°C, 10°C per minute).

$^1H$ NMR (250 MHz, in $CDCl_3$): $\delta$ 0.17 (broad m, 2.6 H, $CH_3Si$), 0.85 (broad m, 1.3, NH), 4.37 (broad s, 0.25 H, SiH), 4.63 (broad s, 0.41 H, SiH) and 4.81 (broad s, 0.33 H, SiH).

IR (thin film, $cm^{-1}$): 3380 (s), 2960(s), 2900(w), 2140-2120 (broad,s), 1545(w), 1405(m), 1255(s), 1200-1150 (broad, vs), 980-750 (broad, vs).

MW: 390 g/mol

TGA: 33% by weight ceramic residue, black solid

Anal. (Based on NMR-derived formula $[CH_3SiHNH][HSi(NH)_{1.4}]_{0.17}$)

Calcd for $CH_{5.41}N_{1.24}Si_{1.17}$, C, 17.7; H, 8.05; N, 25.7

Found: C, 17.75; H, 7.53; N, 25.80.

III. KH-Catalyzed Dehydrocyclodimerization Reactions

One such experiment is described in order to provide details of the procedure used. All reactions were carried out in THF using 1 mol % of the KH catalyst. In all cases, the white solid polymer obtained after the $CH_3I$ quench was characterized by analysis and IR and $^1H$ NMR spectroscopy. The molecular weight was measured by cryoscopy in benzene and a thermal analysis trace (TGA, 50°-950° at 10°C/minute, under argon) was obtained. The results of these experiments are given in the Tables.

A 250 ml, three-necked, round-bottomed flask was equipped with a magnetic stir-bar, a gas inlet tube and two rubber septa and charged with KH (0.04 g, 1.0 mmol). The flask then was connected to the nitrogen line. Dry THF (100 ml) was added by syringe and then 6.355 g (0.1 mol, based on $CH_3SiHNH$ + $[HSi(NH)_{1.5}]$ units) of the polysilazane oil (obtained by ammonolysis of a 1:1 molar ratio mixture of $CH_3SiHCl_2$ and $HSiCl_3$ in diethyl ether) dissolved in 20 ml of THF. The latter solution was added dropwise over a period of 20 minutes. Gas evolution ($H_2$) was observed. The resulting clear solution was stirred at room temperature under nitrogen for 1 hour. Subsequently, methyl iodide (0.46 g, 3.2 mmol) was added by syringe. An immediate white precipitate of KI formed. The mixture was stirred for 30 minutes at room temperature and then the solvent was removed by trap-to-trap distillation. To the residue was added 70 ml of benzene and the mixture was centrifuged to remove insolubles. The solution phase was trap-to-trap distilled (25°C, 0.03 mm Hg) to remove the benzene, leaving a white organic-soluble solid (5.41 g, 93% yield). (Generally, in all other such reactions, the reaction mixture was stirred for 1-18 hours at room temperature after the initial gas evolution was observed. In the present case, such longer reaction times led to formation of insolubles.)

$^1H$ NMR (250 MHz, in $CDCl_3$): δ 0.17 (broad m, 2.5 H, $CH_3Si$), 0.94 (broad, 1.2 H, NH), 4.82 (broad s, 1.0 H, SiH).

IR($CCl_4$, $cm^{-1}$): 3480 (w), 3400(s), 2960(s), 2900(w), 2120(s), 1540(w), 1410(m), 1250(s), 1180-1130(broad,s), 1030(s), 970-850(broad,vs).

MW: 1630 g/mol

TGA (50°-950°C, 10°C per minute, under argon): 87% ceramic yield (black solid).

Anal. Found: C, 14.10; H, 6.12; N, 27.60.

A 3 g sample of this product was pyrolyzed in a tube furnace under argon, leaving a residue of 2.4 g (80%) in the form of a chunk of black solid.

Anal. Found: C, 9.10; H, 0.70; N, 32.56; Si, 56.52.

Assuming that all nitrogen is present as $Si_3N_4$, that the rest of the silicon is present as SiC and that the remaining carbon is present as free carbon, one can calculate from this analysis the composition 1.0 $Si_3N_4$ + 0.46 SiC + 0.81 C or, by weight, 83% $Si_3N_4$, 11% SiC and 6% C.

Pyrolysis of the white solid obtained from another such preparation (1:1 $CH_3SiHCl_2/HSiCl_3$ ammonolysis in THF followed by KH-catalyzed DHCD and $CH_3I$ quench; a 3.53 g sample) in a fused silica boat in a tube furnace in a stream of ammonia (25°-1000°C within 3 hours) gave a white powder residue in 84% by weight yield (100% yield based on the silicon content of the polysilazane). Analysis indicated a carbon content of only 0.29%. .

IV. Preparation of Organosilicon Compounds

1. preparation of $[(CH_3SiH)_x(CH_3Si)_y]_n$ (all operations under nitrogen)

a. In THF Medium.

A 500 ml, three-necked, round-bottomed flask equipped with a stir-bar, a dropping funnel and a reflux condenser was charged with 50.5 g (2.20 g atom) of Na metal. The flask was attached to a Schlenk manifold, evacuated and refilled with nitrogen three times. THF (200 ml) was added and the dropping funnel was charged with 65 ml (0.625 mol) of $CH_3SiHCl_2$. The silane was added to the stirred Na suspension during the course of 45 min., after which time the reaction mixture was cloudy and slightly warm. The mixture was stirred for 16 hours at room temperature and 48 hours at reflux; it then was cooled to room temperature. Hexane (60 ml) was added. The mixture was transferred by cannula to a heavy-walled centrifuge bottle and centrifuged.The supernatant

layer was transferred to a 1 liter round-bottomed flask (under nitrogen). THF (50 ml) and hexane (30 ml) were added to the residual solid and the resulting suspension was centrifuged. The supernatant layers were combined and solvents were removed by trap-to-trap distillation in vacuum until the residual liquid volume was about 100 ml. This liquid was cannulated into a 250 ml single-necked flask and the remaining solvent was removed in vacuo to leave 13.2 g (0.30 mol, 48% yield) of a white, glassy solid. On being heated in a sealed capillary (in vacuo) this solid softened around 40°C and "melted" between 130-140°C with gas evolution, leaving a thick gum. There was no further change up to 300°C except for a gradual increase in viscosity. The product was poorly soluble in hexane, only somewhat soluble in benzene (precluding measurement of its cryoscopic molecular weight in this solvent) and quite soluble in THF. NMR (90 MHz, in $CDCl_3$): 6 0.10-0.61 (m, $SiCH_3$, 7.5H) and 3.55-3.90 (m, SiH, 1H). Based on the reasonable assumption that every Si atom bearing a H substituent also bears a $CH_3$ substituent, the integrated $CH_3Si$ and SiH intensities lead to a constitution $[(CH_3SiH)_{0.4}(CH_3Si)_{0.6}]_n$.
Anal. Calcd for $CSiH_{3.4}$: C, 27.60; H, 7.87.
Found: C, 27.18; H, 7.17.
IR (KBr, Nujol): 2170(sh), 2100(s, Si-H), 1408(m), 1260(m, Si-$CH_3$), 1249(s, Si-$CH_3$), 1060(br), 1019(s), 931(s), 865(vs, Si-$CH_3$), 770(vs), 685(vs), $cm^{-1}$.
TGA(25-1000°C, 10°C/min.): 60% yield of a gray-black ceramic solid. A tube furnace pyrolysis of 3.20 g of this material to 1500°C gave 1.52 g (48%) of a gray ceramic powder.
Anal. of the Ceramic Powder. Found: C, 22.56; si, 78.42; H, 0.01; N, 0.009%. (SiC requires C, 29.94; Si, 70.06%; actual composition: SiC + 0.49 Si). X-ray powder diffraction ($d_o$, Å): 1.315(s) (β -SiC), 1.542(s) (β -SiC), 1.91(m) (Si), 2.181(m), (β -SiC), 2.52(vs) (β -SiC), 3.13(m) (Si).

A mass spectral analysis of the pyrolysis gas in another experiment showed the following: no gaseous products were observed up to 385°C, then fragment ions corresponding well with the reported fragmentation of $CH_3SiH_3$. At 445°C, $CH_3SiH_3$ was still observed and a peak at m/z = 16 ($CH_4$) began to grow in. By 580°C, when weight loss was about over, only the methane peak was observable.

b. In Hexane/THF Medium

In a dry box, a 1 liter three-necked, round-bottomed flask equipped with a stir-bar, a dropping funnel and a reflux condenser was charged with 75.0 g (3.26 mol) of sodium metal. The flask was attached to a Schlenk manifold, evacuated and flushed with nitrogen. THF (70 ml) and hexane (420 ml) were added and the dropping funnel was charged with 150 ml (1.44 mol) of methyldichlorosilane. Methyldichlorosilane was added slowly into the flask over a 3 hour period. The reaction solution turned purple and by the end of the addition was at gentle reflux. The reaction mixture was stirred at room temperature for 2 hours and then heated at reflux for 16 hours. After it had been cooled to room temperature, the reaction mixture (except for the large NaCl crystals) was transferred via cannula into a heavy-walled glass bottle. The mixture was centrifuged and the clear, colorless supernatant layer transferred by cannula into a 1 liter round-bottomed flask equipped with a stir-bar. Hexane (200 ml) and THF (20 ml) were added to the remaining solids, the mixture again was centrifuged, and the supernatant liquid combined with the supernatant solution previously separated. Solvent was removed by trap-to-trap distillation until the volume of the residue was about 100 ml, and the remaining liquid was transferred by cannula into a weighed 250 ml round-bottomed flask. Remaining solvent was removed by trap-to-trap distillation at approximately 0.05 mm Hg at room temperature to give 51.2 g (81%, 1.16 mol) of a cloudy white oil.
$^1H$ NMR (90 MHz, $C_6D_6$):δ 0.37 (broad, $SiCH_3$, 3.74H) 3.92 (broad, SiH, 1 H).
NMR integration of the product gave a constitution of $[(CH_3SiH)_{0.8}(CH_3Si)_{0.2}]_n$.
IR (thin film, $cm^{-1}$): 2967(s), 2900(s), 2800(w), 2099(vs), 1410(s), 1385(w), 1249(s), 1055(br), 933(s), 865(vs), 770(vs), 685(br), 650(sh), 585(w).
Molecular weight (cryoscopic in benzene): 600 g/mol.
Anal. (material from another similar preparation). Calcd. for $CSiH_{3.76}$; C, 27.39; H, 8.55; Si, 64.05. Found: C, 27.49; H, 8.98; si, 61.58%.
TGA (25-1000°C, 10°C/min): 20% yield of a gray-black ceramic solid. Pyrolysis of a sample from another preparation in a tube furnace gave a gray-black ceramic solid in 36% yield (by weight).
Anal. of Ceramic. Found: C, 22.93; Si, 75.99%.

The pure liquid obtained by this procedure is very air-sensitive, particularly when its effective surface area is high, as when in contact with a fritted funnel or a paper or cloth towel (in which cases spontaneous inflammation may occur).

Other, similar reactions have given 62-75% yield of $(CH_3SiH)_x(CH_3Si)_y$. Molecular weight determinations of several preparations ranged from 520-740 g/mol. All products had very similar $^1H$ NMR spectra, but with different $SiCH_3$:SiH ratios. Physical data of these products are listed in Table 11.

TABLE 11

PHYSICAL DATA FOR $[(CH_3SiH)_x(CH_3Si)_y]_n$ POLYMERS

| Sample # | Polymer Yield (%) | M.W.[a] | $SiCH_3$:SiH[b] | Ceramic[c] Yield (%) | x | y |
|---|---|---|---|---|---|---|
| YFY III-1 | 81 | 600 | 3.74:1 | 20 | 0.80 | 0.20 |
| YFY II-40 | 74 | 740 | 3.56:1 | 16 | 0.84 | 0.16 |
| YFY II-25 | 73 | 650 | 3.51:1 | 26 | 0.85 | 0.15 |
| YFY II-12 | 66 | 520 | 3.27:1 | 16 | 0.91 | 0.09 |
| YFY I-73 | 73 | 680 | 3.48:1 | 27 | 0.86 | 0.14 |

[a]Cryoscopic in benzene.

b $^1$H NMR integration ratio.

[c]Under nitrogen gas, 25-1000°C, 10°C/min (TGA)

For the purpose of simplifying calculation, an average formula weight value 44 was assigned for the unit $(CH_3SiH)_x(CH_3Si)_y$. Therefore, in each of the following experiments, the number of moles of the reaction unit $(CH_3SiH)$ was calculated from the weight of the polymer used divided by 44.

The product formed in the THF solution gives a 60% ceramic yield, but it is of limited,solubility in organic solvents and its conversion to ceramic fibers requires a curing step of photolysis/oxidation. Preparation of the $[(CH_3SiH)_x(CH_3Si)_y]_n$ in a hexane/THF mixture of approximately 6 to 7:1 resulted in satisfactory yields of a soluble product. However, pyrolysis of this material resulted in very low ceramic yields, ranging from 16 to 27%.

2. Characterization of the Polycarbosilane.

The polycarbosilane, a white solid, was purchased from Dow Corning Corporation. The following data were collected on it:
$^1$H NMR (90 MHz, $C_6D_6$): δ 4.52 (broad, Si$\underline{H}$, 1H) 0.26 (broad, $SiC\underline{H}_3$ and $SiC\underline{H}_2Si$, 8.6H)
IR (KBr, Nujol, $cm^{-1}$): 2104(s), 1253(s), 1014(s, broad), 845(s, broad), 734(s).
Molecular Weight (cryoscopic in benzene): 1210 g/mol TGA (25-1000°C, 10°C/min): 58% yield of a black ceramic solid.
$T_{1/2}$ = 510°C

3. Preparation of Siloxanes

a. Preparation of $[CH_3Si(H)O]_n$(IV-31)

A 500 ml three-necked, round-bottomed flask equipped with a stir-bar, a reflux condenser, and a serum cap was charged with 90 ml (0.87 mol) of $CH_3SiHCl_2$ and 250 ml of $CH_2Cl_2$. To the solution was added slowly

(syringe pump) 20 ml (1.11 mol) of $H_2O$ over a two hour period. The reaction mixture was stirred at room temperature for 24 hours. Eight 100 ml portions of $H_2O$ were added to the reaction mixture. The $CH_2Cl_2$ layer was washed with two 100 ml portions of $H_2O$ and dried over $MgSO_4$. The solvent was removed by rotary evaporation to give 44.5 g (85% yield based on $(CH_3Si(H)O)$ unit) of a clear oil.
$^1H$ NMR (90 MHz, $C_6D_6$):δ 4.71, 4.69(broad, SiH, 1 H) 0.23, 0.21 (broad, $SiCH_3$, 3 H) IR (neat, $cm^{-1}$): 2976(s), 2918(w), 2162(s), 1410(w), 1260(s), 1030-1140 (broad,s), 830-920 (broad,s), 769(s), 715(w).

This is the procedure described by D. Seyferth, C. Prud'homme and G.H. Wiseman (Inorg. Chem., 22 (1983) 2163) in the hydrolysis of $CH_3SiHCl_2$. A good yield of cyclic $[CH_3Si(H)O]_n$ oligomers was reported, mostly n=4, 5 and 6, but some higher n (up to n=22) was also obtained in lower yield. The ceramic yield of these oligomers is low and will vary from 0 to 5 % depending upon the pyrolysis conditions and the particular oligomer used.

b . Preparation of Mixed Siloxane. $[(CH_3Si(H)O)_r((CH_3)_2SiO)_s]_n$(IV-46)

A 500 ml three-necked, round-bottomed flask equipped with a stir-bar, a reflux condenser, and a serum cap was charged with 100 ml (0.96 mol) of $CH_3SiHCl_2$, 50 ml (0.41 mol) of $(CH_3)_2SiCl_2$, and 250 ml of $CH_2Cl_2$. To the solution there was added 60 ml (3.33 mol) of $H_2O$ (slowly by syringe pump) over a 4 hour period. Reaction occurred immediately. The reaction mixture was stirred at room temperature for 24 hours and then was washed with fifteen 200 ml portions of $H_2O$ until the $H_2O$ washings were neutral pH. The $CH_2Cl_2$ layer was dried over $MgSO_4$ and the solvent was removed by rotary evaporation to give 64.7 g (87% yield by weight) of a clear oil.
$^1H$ NMR (90 MHz, $C_6D_6$):δ 4.99 (broad, SiH, 1 H) 0.22, 0.16 (broad, $SiCH_3$, 6H)
IR (neat, $cm^{-1}$): 2972(s), 2168(s), 1410(w), 1260(s), 1030-1120 (broad,s), 880(s), 836(s), 804(s), 769(s), 708(w)

C. Characterization of Commercial $[CH_3Si(H)O]_n$(Petrarch PS-122)

IR (neat): 2982(m), 2171(s), 1413(w), 1262(s), 1030-1140 (s,broad), 860-905 (s,broad), 765(s), 718(w) $cm^{-1}$
$^1H$ NMR ($C_6D_6$):δ 0.25 (broad s, $SiCH_3$, 3.4H), 5.04 (broad s, SiH, 1H)
Average Molecular Weight: 4500-5000 (vendor data)
Ceramic Yield: (TGA, 25-1000°C., 10°C./minute): 13% (black solid)

V. Graft Reactions

A. Graft Reaction of the Coammonolysis Product of Methyldichlorosilane and Vinyltrichlorosilane (3:1 Ratio THF) and Polymethylhydridosiloxane (PS 122) with Potassium Hydride in THF.

A 100 ml, three-necked, round-bottomed flask was equipped with a reflux condenser with gas inlet tube on top, a stir-bar and two septa and oven-dried for 1 hour. (This will be termed the "standard reaction apparatus".) The apparatus was taken into the dry box and charged with potassium hydride (0.02 g, 0.50 mmol) and was then connected to a nitrogen line, and charged with 50 ml of THF. The oil (1.64 g, 26.0 mmol) from the coammonolysis of $CH_3SiHCl_2$ and $CH_2$-$CHSiCl_3$ (3:1 ratio) in THF was added dropwise by syringe over 15 minutes. Gas evolution was observed. The reaction mixture was stirred for an additional hour at room temperature. By syringe, polymethylhydridosiloxane (Petrarch systems, Inc. PS 122) (1.59 g, 26.5 mmol) was added to the reaction mixture. After stirring 35 minutes, methyl iodide (0.46 g, 3.2 mmol) was added and an immediate white precipitate formed. The solvent was removed by trap-to-trap distillation (25°C, 0.03 mm Hg) and the residue extracted with 40 ml of hexane. The reaction mixture was centrifuged and the supernatant liquid cannulated into a 100 ml flask. Removal of the hexane by trap-to-trap distillation left a white solid (2.44 g, 75%).
$^1H$ NMR ($CDCl_3$, 250 MHz): δ 0.17 (broad, 9.7 H, $SiCH_3$),
0.99 (broad, 3.0 H, NH), 4.38 (broad, 0.07 H, SiH), 4.74 (broad, 0.93 H, SiH), 5.91 (broad, 2.1 H, $SiCH=CH_2$).
IR ($CCl_4$, $cm^{-1}$): 3400(s), 3050(m), 3010(sh), 2960(s), 2900(sh),
2140-2120 (broad, s), 1595(m), 1405(s), 1270-1250 (broad, vs), 1200-1020 (broad, vs), 990-840 (broad, vs).
MW (cryoscopy in benzene): 1340 g/mol.
TGA (10°C/min, Ar, 50°-950°C): 86% ceramic yield, black residue.

B. Graft Reaction of the Coammonolysis Product of Methyldichlorosilane and Vinyltrichlorosilane (3:1 Ratio THF) and Polymethylhydridosilane with Potassium Hydride in THF.

The standard reaction apparatus was charged with potassium hydride (0.02 g, 0.50 mmol) and 50 ml THF as previously described. The oil (1.70 g, 27.1 mmol) from the coammonolysis of $CH_3SiHCl_2$ and $CH_2=CHSiCl_3$

(3:1 ratio) in THF was added dropwise over 15 minutes. Gas evolution was observed. The reaction mixture was stirred an additional hour at room temperature. Polymethylhydridosilane (1.24 g, 28.2 mmol) from the reaction of $CH_3SiHCl_2$ and excess sodium in a 6:1 hexane/THF solvent mixture was added by syringe. The reaction mixture became orange and then after 10 minutes turned yellow. The reaction mixture was stirred an additional 35 minutes at room temperature and then methyl iodide (0.46 g, 3.2 mmol) was added by syringe. An immediate white precipitate formed and the yellow color of the reaction mixture was discharged. The solvent was removed by trap-to-trap distillation and the residue, extracted with 40 ml hexane. The reaction mixture was centrifuged and the supernatant liquid cannulated into a 100 ml flask. Removal of the hexane by trap-to-trap distillation left a white solid (2.74 g, 93%).
$^1H$ NMR ($CDCl_3$, 250 MHz): δ 0.28 (broad, 3.1 H, $SiCH_3$), 1.25 (broad, 0.55 H, NH), 3.65 (broad, 0.21 H, SiH), 4.38 (broad, 0.35 H, SiH), 4.76 (broad, 0.44 H, SiH), 5.95 (broad, 0.53 H, $SiCH{=}CH_2$).
IR ($CCl_4$, $cm^{-1}$): 3390(w), 3150(w), 3050(m), 2960(s), 2900(m), 2160-2140 (broad, vs), 1410(s), 1260(s), 1190-1140 (broad, s), 1040-840 (broad, vs), 710 (vs), 590(w).
MW (cryoscopy in benzene): 1612 g/mol.
TGA (10°C/min., Ar, 50°-950°C): 86% ceramic yield, black solid residue.

C. Graft Reaction of the Coammonolysis Product of Methyldichlorosilane and Vinyltrichlorosilane (3:1 Ratio THF) and Polycarbosilane (Dow Corning X9-6348) with Potassium Hydride in THF.

The apparatus was charged with potassium hydride (0.02 g, 0.50 mmol) and 50 ml of THF. The oil (1.65 g, 26.0 mmol) from the coammonolysis of $CH_3SiHCl2$ and $CH_2{=}CHSiCL_3$ (3:1 ratio) in THF was added dropwise by syringe over 15 minutes. Gas evolution was observed. The reaction mixture was stirred for an additional hour at room temperature. Polycarbosilane (1.64 g, 28.0 mmol, Dow corning X9-6348) was ground to a fine powder with a mortar and pestle and placed in a 25 ml, one-necked flask. The flask was degassed and then 10 ml of THF was added. The resulting solution was cannulated into the reaction mixture. After stirring for 35 minutes., methyl iodide (0.46 g, 3.2 mmol) was added and an immediate white precipitate formed. The solvent was removed by trap-to-trap distillation (25°C, 0.03 mm Hg) and the residue extracted with 40 ml of hexane. The reaction mixture was centrifuged and the supernatant liquid cannulated into a 100 ml flask. Removal of the hexane by trap-to-trap distillation left a white solid (3.04 g, 92%).
$^1H$ NMR ($CDCl_3$, 250 MHz): δ 0.16 (broad, 5.6 H, $SiCH_3$), 0.95 (broad, 1.25 H, NH), 4.16 (broad, 0.3 H, SiH), 4.71 (broad, 0.7 H, SiH), 5.91 (broad, 0.8 H, $SiCH{=}CH_2$).
IR ($CCl_4$, $cm^{-1}$): 3400(s), 3050(m), 3010(sh),. 2960(s), 2900(m), 2120-2100 (broad, s), 1600(w), 1410(s), 1360(m), 1270-1250 (broad, vs), 1190-1130 (broad, vs), 1050-840 (broad, vs).
MW (cryoscopy in benzene): 862 g/mol.
TGA (10°C/min., Ar, 50°-950°C): 85% ceramic yield, black solid residue.

D. Graft Reaction of the Coammonolysis Product of Methyldichlorosilane and Trichlorosilane (3:1 Ratio. THF and Polymethylhydridosiloxane (PS 122) with Potassium Hydride in THF.

A three-necked round-bottomed flask was equipped with a gas inlet tube, a stir-bar and two septa, oven-dried for 1 hour and then was charged with potassium hydride (0.02 g, 0.50 mmol). The apparatus was then connected to a nitrogen line and 50 ml of THF was added. The oil (1.64 g, 0.029 mol) from the coammonolysis of $CH_3SiHCl_2$ and $HSiCl_3$ (3:1 ratio) in THF, was added over 5 minutes. Gas evolution was observed. The reaction mixture was stirred for an additional 45 minutes at room temperature. By syringe, polymethylhydridosiloxane (1.58 g, 0.026 mol., Petrarch System, Inc., PS 122) was added to the reaction mixture. After stirring 30 minutes, methyl iodide (0.46 g, 3.2 mmol) was added and an immediate white precipitate formed. The solvent was removed by trap-to-trap distillation (25°C, 0.1 mm Hg) and the residue extracted with 40 ml of hexane. The reaction mixture was centrifuged and the supernatant liquid cannulated into a 100 ml flask. Removal of the hexane by trap-to-trap distillation left a white solid (2.30 g, 71%).
$^1H$ NMR ($CDCl_3$, 250 MHz): δ 0.10 (broad, 4.5 H, $SiCH_3$), 0.93 (broad, 2.0 H, NH), 4.84 (broad, 1.0 H, SiH).
IR ($CCl_4$, $cm^{-1}$): 3490(w), 3400(s), 2960(s), 2900(w), 2870(sh), 2820(w), 2130(s), 1580(w), 1425(m), 1265 (broad, s), 1200-1020 (broad, vs), 980-850 (broad, vs).
MW (cryoscopy in benzene); 1855 g/mol
TGA (10°C/min, Ar, 50°-950°C): 88% ceramic yield, black solid residue.

E. Graft Reaction of the Coammonolysis Product of Methyldichlorosilane and Trichlorosilane (3:1 Ratio. THF) and Polymethylhydridosilane with Potassium Hydride in THF.

The apparatus was charged with KH (0.02 g, 0.50 mmol) and 50 ml of THF. The oil (1.77 g, 0.031 mol) from the coammonolysis of $CH_3SiHCl_2$ and $HSiCl_3$ (3:1 ratio) in THF was added over 5 minutes. Gas evolution was observed. The reaction mixture was stirred an additional 45 minutes at room temperature. Polymethylhydridosilane (1.30 g, 0.030 mol) from the reaction of $CH_3SiHCl_2$ and excess sodium in 6:1 hexane/THF was added. The reaction mixture became orange and then after 10 minutes turned yellow. The reaction mixture was stirred an additional 30 minutes at room temperature and then methyl iodide (0.46 g, 3.2 mmol) was added. An immediate white precipitate formed and the yellow color of the mixture was discharged. The solvent was removed by trap-to-trap distillation and the residue extracted wtin 40 ml of hexane. The reaction mixture was centrifuged and the supernatant liquid cannulated into a 100 ml flask. Removal of the hexane by trap-to-trap distillation left a white solid (2.70 g, 88%).

$^1H$ NMR ($CDCl_3$, 250 MHz): δ 0.30 (broad, 2.6 H, $SiCH_3$), 1.23 (broad, 0.58 H, NH), 3.65 (broad, 0.19 H, SiH), 4.4 (broad, 0.28 H, SiH), 4.8 (broad, 0.53 H, SiH).

IR ($CCl_4$, $cm^{-1}$: 3670 (broad, w), 3490 (m), 3150 (s), 3060 (s), 2960(s), 2900(w), 2280(s), 2150 (broad, vs), 1815(s), 1670(w), 1415(s), 1265(s), 1190 (broad, w), 1050-1020 (broad, vs), 980-850 (broad, vs), 700(w).

MW (cryoscopy in benzene): 2200 g/mol

TGA (10°C/min., Ar, 50°-950°C): 75% ceramic yield, black solid residue.

F. Graft Reaction of the Coammonolysis Product of Methyldichlorosilane and Trichlorosilane (3:1 Ratio. THF and Polycarbosilane (Dow Corning X9-6348) with Potassium Hydride in THF.

The apparatus was charged with KH (0.02 g, 0.50 mmol) and 50 ml of THF. The oil (1.61 g, 0.028 mol) from the coammonolysis of $CH_3SiHCl_2$ and $HSiCl_3$ (3:1 ratio) in THF was added over 5 minutes. Gas evolution was observed. The reaction mixture was stirred an additional 30 minutes at room temperature. Polycarbosilane (1.45 g, 0.025 mol, Dow Coming X9-6348) was ground to a fine powder and placed in a 25 ml one-necked flask. The flask was degassed and then 10 ml of THF was added. This solution was then cannulated into the reaction mixture. After stirring for 30 minutes, methyl iodide (0.46 g, 3.2 mmol) was added and an immediate white precipitate formed. The solvent was removed by trap-to-trap distillation (25°C, 0.1 mm Hg) and the residue extracted with 40 ml of hexane. The reaction mixture was centrifuged and the supernatant liquid cannulated into a 100 ml flask. Removal of the hexane by trap-to-trap distillation left a white solid (2.97 g, 95%).

$^1H$ NMR ($CDCl_3$, 250 MHz): δ 0.16 (broad, 5.0 H, $SiCH_3$), 0.95 (broad, 0.8 H, NH), 1.24 (0.7 H, NH), 4.4 (broad, 0.3 H, SiH), 4.8 (broad, 0.7 H, SiH).

IR ($CCl_4$, $cm^{-1}$): 3490(w), 3400(s), 2960(s), 2900(m), 2875(sh), 2120 (broad, s), 1460(w), 1415(m), 1365(m), 1260(s), 1175 (broad, vs), 1030 (broad, s), 1080-850 (broad, vs).

MW (cryoscopy in benzene): 845 g/mol

TGA (10°C/min., Ar, 50°-950°C): 76% ceramic yield, black solid residue.

TABLE 12

HYBRID POLYMERS

| Reaction | Product | Yield,% | $\overline{MW}$ | Ceramic Yield by TGA,% |
|---|---|---|---|---|
| 3:1 $CH_3SiHCl_2$/ $ViSiCl_3$ (THF) with KH/PS 122 | solid | 75 | 1340 | 86 |
| 3:1 $CH_3SiHCl_2$/ $ViSiCl_3$ (THF) * with KH/D.C. Polycarbosilane | solid | 92 | 862 | 85 |
| 3:1 $CH_3SiHCl_2$/ $ViSiCl_3$ (THF) with KH/$(CH_3SiH)_{0.78}$-$(CH_3Si)_{0.22}$ | solid | 93 | 1612 | 86 |
| 3:1 $CH_3SiHCl_2$/ $HSiCl_3$ (THF) with KH/PS 122 | solid | 71 | 1855 | 88 |
| 3:1 $CH_3SiHCl_2$/ $HSiCl_3$ (THF) with KH/D.C. Polycarbosilane | solid | 95 | 845 | 76 |
| 3:1 $CH_3SiHCl_2$/ $HSiCl_3$ (THF) with KH/$(CH_3SiH)_{0.78}$-$CH_3Si)_{0.22}$ | solid | 88 | 2200 | 75 |

* Vi = vinyl

VI. "In-Situ Procedure"

A. Reaction of a Coammonolysis Mixture of $CH_3SiHCl_2/HSiCl_3$ and $[(CH_3SiH)_x(CH_3Si)_y]_n$ with KH Catalyst

1. Using Coammonolysis Product Prepared in Diethyl Ether

In a dry box, a 250 ml round-bottomed flask equipped with a stir-bar, reflux condenser and a serum cap is charged with 0.10 g of KH (0.0025 mol). THF (50 ml) is added to suspend the KH. A separate 250 ml Schlenk flask is charged with 2.0 g of a $CH_3SiHCl_2/HSiCl_3$ coammonolysis mixture that is prepared as described in section II. This mixture is prepared by ammonolysis of $CH_3SiHCl_2$ and $HSiCl_3$ in ether solution, and then combined with 2.2 g of $[(CH_3SiH)_x(CH_3Si)_y]_n$ (0.05 mol, x = 0.74, y = 0.26), and 100 ml of THF. The mixed polymer solution is transferred by cannula into the KH suspension. The reaction mixture gradually changes color to light orange and hydrogen gas is slowly evolved. The resulting solution is stirred at room temperature for 14 hours and is then heated at reflux for 1 hour. The light orange color of the solution persists. The reaction mixture is allowed to cool to room temperature and 0.5 ml (7.9 mmol) of $CH_3I$ is added to form a white precipitate. The solvent is removed by trap-to-trap distillation. The product is extracted with 200 ml of hexane and the insoluble residue is removed by centrifugation.

The clear, colorless supernatant layer is transferred via cannula into a weighed 250 ml round-bottomed

flask The hexane is removed by trap-to-trap distillation leaving 3.8 g (91% by weight) of a white powder. The latter is soluble in THF, benzene, and hexane.

2. Using a Coammonolysis mixture of $CH_3SiHCl_2/HSiCl_3$ Prepared in THF

According to the procedure described above, the reaction between 0.1 g of KH (0.0025 mol), 2.0 g of the coammonolysis product of $CH_3SiHCl_2/HSiCl_3$ (prepared in THF solution), and 2.2 g of $[(CH_3SiH)_x(CH_3Si)_y]_n$ (x = 0.74, y = 0.26) is carried out under nitrogen. The resulting reaction mixture also gradually changes color to light orange with slow evolution of hydrogen gas. The solution is stirred at room temperature for 14 hours and then 0.5 ml (7.9 mmol) of $CH_3I$ is added. Work-up as described in the previous experiment leaves a white, soluble solid.

B. Reactions of a Mixture of a Coammonolysis Mixture and Polycarbosilane with KH Catalysis.

1. Using a Coammonolysis Mixture of $CH_3SiHCl_2/HSiCl_3$ Prepared from Diethyl Ether.

c. Polycarbosilane/Coammonolysis Mixture in 1:1 weight ratio

In a dry box, a 250 ml round-bottomed flask equipped with a stir-bar, reflux condenser and a serum cap is charged with 0.15 g of KH (3.75 mmol). THF (50 ml) is added to suspend the KH. A separate 250 ml Schlenk flask is charged wtih 5.0 g of the coammonolysis product of $CH_3SiHCl_2$ and $HSiCl_3$ prepared in ether solution, and 5.0 g of polycarbosilane, and 150 ml of THF. The mixed polymer solution is transferred by cannula into the KH suspension in THF. The reaction mixture gradually turns clear and hydrogen gas slowly evolves. The resulting solution is stirred at room temperature for 2 hours and is then heated at reflux for 24 hours. The reaction mixture is allowed to cool to room temperature and 0.5 ml (7.9 mmol) of $CH_3I$ is added and the mixture is heated for several hours. The solvent is removed by trap-to-trap distillation. The product is extracted with 200 ml of hexane and the insoluble residue is removed by centrifugation. The clear, colorless supernatant layer is transferred via a cannula into a weighed 250 ml round-bottomed flask. The hexane is removed by trap-to-trap distillation leaving a white powder. The white powder is soluble in THF, benzene, and hexane.

C. Reactions of Mixture of a Coammonolysis Mixture and cyclic $[CH_3Si(H)O]_n$ with KH catalyst

1. $[CH_3Si(H)O]_n$/Coammonolysis Mixture of $CH_3SiHCl_2/HSiCl_3$ in 1:1 weight ratio

In a dry box, a 250 ml round-bottomed flask equipped with a stir-bar, reflux condenser, and a serum cap is charged with 0.1 g of KH (2.50 mmol). THF (100 ml) is added to suspend the KH. A separate 250 ml flask is charged with 4.0 g of the product, prepared by coammonolysis of $CH_3SiHCl_2$ and $HSiCl_3$ in THF solution, and 3.6 g of $[CH_3Si(H)O]_n$, and 50 ml of THF. This solution is transferred by cannula into the KH suspension in THF. The reaction mixture gradually turns clear and hydrogen gas is slowly evolved. The resulting solution is stirred at room temperature for 4 hours and then 0.5 ml (7.9 mmol) of $CH_3I$ is added. The solvent is removed by trap-to-trap distillation. The residual solid is treated with 80 ml of hexane and the insoluble residue is removed by centrifugation. The clear, colorless supernatant layer is transferred via cannula into a weighed 100 ml round-bottomed flask. The hexane is removed by trap-to-trap distillation leaving of a white powder. The latter is soluble in THF, benzene, and hexane.

**Claims**

1. A method for preparing preceramic organosilicon polymers, wherein the method comprises:
(a) reacting in solution anhydrous ammonia with a mixture of $R^1SiHX_2$, wherein $R^1$ is a lower alkyl group having from 1 to 6 carbon atoms, a substituted or unsubstituted cycloalkyl group having from 3 to 6 carbon atoms, a substituted or unsubstituted lower alkenyl group having from 2 to 6 carbon atoms, or a substituted or unsubstituted lower aryl group having from 6 to 10 carbon atoms, and X is a halogen, and $RSiX_3$ wherein R is H, a lower alkyl group having from 1 to 6 carbon atoms, a substituted or unsubstituted cycloalkyl group having from 3 to 6 carbon atoms, or a substituted or unsubstituted lower alkenyl group having from 2 to 6 carbon atoms, or a substituted or unsubstituted lower aryl group having from 6 to 10 carbon atoms, thereby forming a mixture of precursor polymers; and
(b) reacting said precursor polymers in the presence of a basic catalyst capable of deprotonating the NH

functions in said precursors to form said preceramic polymer.

2. The method of claim 1 further comprising the additional step of treating said preceramic polymer with an electrophile compound.

3. The method of claim 1 wherein X is Cl, $R^1$ is a lower alkyl group and R is H or a lower alkyl group.

4. The method of claim 3 wherein $R^1$ is $CH_3$.

5. The method of claim 4 wherein R is H or $CH_3$.

6. The method of claim 1 or 3 wherein the mole ratio of $R^1SiHX_2$:$RSiX_3$ is from 8:1 to 1:6.

7. The method of claim 4 wherein the mole ratio of $R^1SiHX_2$:$RSiX_3$ is from 6:1 to 1:6.

8. The method of claims 1 and 6 wherein in the mole ratio is 8:1 to 1:2.

9. The method of claims 3 and 6 or of claim 5 or 7 wherein the mole ratio is 6:1 to 1:2.

10. The method of claim 9 wherein the mole ratio is 6:1 to 3:1, preferably 2:1 to 1:2.

11. The method of any preceding claim wherein said basic catalyst is selected from alkali metals, alkali and alkaline earth metal hydrides, complex metal hydrides, alkali metal alkoxides, alkali metal and alkaline earth metal amides, alkali and alkaline earth metal silylamides and alkali metal organic compounds.

12. The method of claim 2 wherein the electrophile has the formula $E-X^1$ where E is an organic or silyl group, and $X^1$ is a halide, sulfate or sulfonate,

13. The method of claim 12 wherein E is a lower alkyl group or silyl group,

14. The method of any preceding claim wherein the preceramic polymer is pyrolyzed under an inert gas stream at a sufficient temperature and for a sufficient time to form a ceramic material,

15. The method of claim 14 wherein the preceramic polymer is pyrolyzed under a stream of ammonia.

16. A method according to claim 2 for preparing ceramic fibers which further comprises introducing C=C functionalities into the coammonolysis product; forming preceramic fibers, curing said preceramic fibers by a hydrosilylation reaction, and thereafter pyrolyzing the cured preceramic fibers.

17. The method of claim 16 wherein the C=C functionalities are introduced by having R or $R^1$ be a substituted or unsubstituted lower alkenyl group having from 2 to 6 carbon atoms.

18. The method of claim 16 wherein the C=C functionalities are introduced by adding a third compound containing an unsaturated functionality to the mixture containing anhydrous ammonia, $R^1SiHX_2$ and $RSiX_3$.

19. The method of claim 16, 17 or 18 wherein curing is initiated by irradiation with an electron beam, an X-ray source, or ultraviolet irradiation.

20. A method according to claim 1 which comprises

(a) mixing an organosilicon polymer containing Si-H repeat units with at least a catalytic amount of a polymeric silylamide in an organic solvent, wherein the silylamide is a polymeric silylamide formed by reacting in solution anhydrous ammonia with a mixture of $R^1SiHX_2$, wherein $R^1$ is a lower alkyl group having from 1 to 6 carbon atoms, a substituted or unsubstituted cycloalkyl group having from 3 to 6 carbon atoms, a substituted or unsubstituted lower alkenyl group having from 2 to 6 carbon atoms, or a sustituted or unsubstituted lower aryl group having from 6 to 10 carbon atoms, and X is a halogen, and $R^2SiX_3$, wherein $R^2$ is H, a lower alkyl group having from 1 to 6 carbon atoms, a substituted or unsubstituted cycloalkyl group having from 3 to 6 carbon atom, or a substituted or unsubstituted lower alkenyl group having from 2 to 6 carbon atoms, or a substituted or unsubstituted lower aryl group having from 6 to 10 carbon atoms, thereby forming a polysilazane; and reacting said polysilazane in the presence of a basic catalyst capable of deprotonating the NH functions in said polysilazane to form said polymeric silylamide;

(b) allowing the mixture of step (a) to react at room temperature or above; and

(c) quenching the reaction mixture with a reactive electrophile, thereby forming said preceramic organosilicon polymer.

21. A method according to claim 1 which comprises:

(a) generating a polymeric silylamide in the presence of an Si-H containing organosilicon polymer wherein the polysilylamide is generated by reacting the coammonolysis product of a mixture of $R^1SiHX_2$, where $R^1$ is a lower alkyl group having from 1 to 6 carbon atoms, a substituted or unsubstituted cycloalkyl group having from 3 to 6 carbon atoms, a substituted or unsubstituted, lower alkenyl group having from 2 to 6 carbon atoms, or a substituted or unsubstituted lower aryl group having from 6 to 10 carbon atoms; and X is a halogen; with $R^2SiX_3$ wherein $R^2$ is H, a lower alkyl group having from 1 to 6 carbon atoms, a substituted or unsubstituted cycloalkyl group having from 3 to 6 carbon atoms, or a subtituted or unsubstituted lower alkenyl group having from 2 to 6 carbon atoms, or a substituted or unsubstituted lower aryl group having from 6 to 10 carbon atom in the presence of a basic catalyst capable of deprotonating the hydrogen from a nitrogen atom adjacent to a silicon atom to generate the polysilylamide in situ;

(b) allowing the in situ generated polymeric silylamide and the Si-H containing organosilicon polymer sufficient time to react with each other at room temperature; and

(c) quenching the mixture with an organic halide or halosilane to produce the organosilicon preceramic

polymer.

22. The method of claim 20 or 21 wherein the Si-H containing organosilicon polymer is selected from organopolysilanes of the formula: $[(RSiH)_x(RSi)_Y]_n$, where x + y = 1, R is a lower alkyl group having from 1 to 6 carbon atoms, a lower alkenyl group having 2 to 6 carbon atoms, a substituted or unsubstituted lower aryl group having from 6 to 10 carbon atoms, and n is an integer greater than 1; polycarbosilanes having a plurality of repeat units of the formula $[R^aSi(H)\text{-}(CH_2)_q]$ where $R^a$ is H, a lower alkyl group having from 1 to 6 carbon atoms, a cycloalkyl group having 3 to 6 carbon atoms, a subsituted or unsubstituted lower aryl group having from 6 to 10 carbon atoms, and q is an integer 1 or greater; and polysiloxanes having a plurality of repeat units of the formula $[R^bSi(H)O]_n$ where $R^b$ is a lower alkyl group having from 1 to 6 carbon atoms, a cycloalkyl group having 3 to 6 carbon atoms, a substituted or unsubstituted lower aryl group having from 6 to 10 carbon atoms, and n is an integer greater than 1.

23. The method of claim 22 wherein the polycarbosilane contains at least 25 mole % of repeat units of the formula $[R^aSi(H)\text{-}(CH_2)_q]$ and the polysiloxane contains at least 25 mole % of repeat units of the formula $[R^bSi(H)O]_n$.

24. The method of claim 22 or 23 wherein R, $R^a$ and $R^b$ are a lower alkyl group, preferably $CH_3$.

25. The method of claim 20 or 21 wherein $R^1$ is a lower alkyl group, $R^2$ is H or a lower alkyl group.

26. The method of claim 20 wherein the Si-H containing the organosilicon polymer is an organopolysilane and x = 1, y = 0.

27. The method of claim 20 wherein the reaction mixture is quenched with an electrophile, $E\text{-}X^1$, where E is selected from lower alkyl groups and silyl groups and $X^1$ is selected from halogen, sulfate and sulfonate.

28. The method of claim 20, 21 or 22 wherein the mole ratio of organopolysilane to silylamide ranges from 4:1 to 1:4.

29. The method of any of claims 20 to 28 wherein the preceramic product is pyrolyzed in an inert atmosphere to form a ceramic material.

30. The method of claim 29 wherein the Si-H containing organosilicon polymer is a polysiloxane and the preceramic product is pyrolyzed under an ammonia atmosphere.

31. The method of claim 22 wherein the Si-H containing organosilicon polymer is organopolysilane and is present in sufficient quantity in relation to the polymeric silylamide that the excess carbon obtained on pyrolysis of the silylamide can react with excess silicon from the pyrolysis of the organopolysilane compound, thus producing a ceramic product which contains substantially no free silicon or free carbon.

32. The method of claims 21 and 22 wherein the Si-H containing organosilicon polymer is a mixture of the polycarbosilane and the organopolysilane, with a sufficient quantity of the organopolysilane added so that the excess silicon obtained on pyrolysis of the organopolysilane can react with excess carbon from the pyrolysis of the polycarbosilane and the in situ generated polymeric silylamide, thereby reducing the amount of free carbon.

**Patentansprüche**

1. Verfahren zur Bildung präkeramischer Organosiliziumpolymere, wobei das Verfahren

(a) das Umsetzen von Ammoniakanhydrid in einer Lösung mit einem Gemisch von $R^1SiHX_2$, wobei $R^1$ eine niedrige Alkylgruppe mit 1 bis 6 Kohlenstoffatomen, eine substituierte oder unsubstituierte Cycloalkylgruppe mit 3 bis 6 Kohlenstoffatomen, eine substituierte oder unsubstituierte niedrige Alkenylgruppe mit 2 bis 6 Kohlenstoffatomen oder eine substituierte oder unsubstituierte niedrige Arylgruppe mit 6 bis 10 Kohlenstoffatomen ist und X ein Halogen ist, und $RSiX_3$, wobei R Wasserstoff, eine niedrige Alkylgruppe mit 1 bis 6 Kohlenstoffatomen, eine substituierte oder unsubstituierte Cycloalkylgruppe mit 3 bis 6 Kohlenstoffatomen, eine substituierte oder unsubstituierte niedrige Alkenylgruppe mit 2 bis 6 Kohlenstoffatomen oder eine substituierte oder unsubstituierte niedrige Arylgruppe mit 6 bis 10 Kohlenstoffatomen ist, wodurch ein Gemisch von Vorläuferpolymeren gebildet wird, und

(b) das Umsetzen der Vorläuferpolymere in Anwesenheit eines basischen Katalysators, der in der Lage ist, den NH-Funktionen in den Vorläufern die Protonen zu entziehen und so das präkeramische Polymer zu bilden, umfaßt.

2. Verfahren nach Anspruch 1, das weiter den zusätzlichen Schritt der Behandlung des präkeramischen Polymers mit einer elektrophilen Verbindung umfaßt.

3. Verfahren nach Anspruch 1, wobei X Cl ist, $R^1$ eine niedrige Alkylgruppe und R Wasserstoff oder eine niedrige Alkylgruppe ist.

4. Verfahren nach Anspruch 3, wobei $R^1$ $CH_3$ ist.

5. Verfahren nach Anspruch 4, wobei R Wasserstoff oder $CH_3$ ist.

6. Verfahren nach Anspruch 1 oder 3, wobei das Molverhältnis von $R^1SiHX_2$ : $RSiX_3$ von 8: 1 bis 1 : 6 beträgt.

7. Verfahren nach Anspruch 4, wobei das Molverhältnis von $R^1SiHX_2$ : $RSiX_3$ von 6 : 1 bis 1 : 6 beträgt.

8. Verfahren nach Anspruch 1 und 6, wobei das Molverhältnis 8 : 1 bis 1 : 2 beträgt.

9. Verfahren nach Anspruch 3 und 6 oder nach Anspruch 5 oder 7, wobei das Molverhältnis 6 : 1 bis 1 : 2 ist.

10. Verfahren nach Anspruch 9, wobei das Molverhältnis 6 : 1 bis 3 : 1, vorzugsweise 2 : 1 bis 1 : 2 beträgt.

11. Verfahren nach einem der vorstehenden Ansprüche, wobei der basische Katalysator ausgewählt ist aus Alkalimetallen, Alkali- und Erdalkalimetallhydriden, Metallkomplexhydriden, Alkalimetallalkoxiden, Alkali- und Erdalkalimetallamiden, Alkali- und Erdalkalimetallsilylamiden und Alkalimetallorganoverbindungen.

12. Verfahren nach Anspruch 2, wobei die elektrophile Verbindung die Formel $E\text{-}X^1$ hat, wobei E eine Organo- oder Silylgruppe und $X^1$ ein Halid, Sulfat oder Sulfonat ist.

13. Verfahren nach Anspruch 12, wobei E eine niedrige Alkylgruppe oder Silylgruppe ist.

14. Verfahren nach einem der vorstehenden Ansprüche, wobei das präkeramische Polymer unter einem Inertgasstrom bei ausreichender Temperatur über eine ausreichende Zeitspanne pyrolisiert wird, um ein keramisches Material zu bilden.

15. Verfahren nach Anspruch 14, wobei das präkeramische Polymer unter einem Ammoniakstrom pyrolisiert wird.

16. Verfahren nach Anspruch 2 zur Bildung keramischer Fasern, das weiter das Einführen von C=C-Funktionen in das Produkt der Coammonolyse, die Bildung von präkeramischen Fasern, das Härten der präkeramischen Fasern durch eine Hydrosilylationsreaktion und das anschließende Pyrolisieren der gehärteten präkeramischen Fasern umfaßt.

17. Verfahren nach Anspruch 16, wobei die C=C-Funktionen eingeführt werden, indem als R oder $R^1$ eine substituierte oder unsubstituierte niedrige Alkenylgruppe mit 2 bis 6 Kohlenstoffatomen verwendet wird.

18. Verfahren nach Anspruch 16, wobei die C=C-Funktionen eingeführt werden, indem eine dritte Verbindung dem Ammoniakanhydrid, $R^1SiHX_2$ und $RSiX_3$ enthaltenden Gemisch hinzugefügt wird, die eine ungesättigte Funktion enthält.

19. Verfahren nach Anspruch 16, 17 oder 18, wobei das Härten durch Bestrahlen mit einem Elektronenstrahl, einer Röntgenquelle oder ultravioletter Strahlung eingeleitet wird.

20. Verfahren nach Anspruch 1, umfassend

(a) das Mischen eines Si-H-Wiederholungseinheiten enthaltenden Organosiliziumpolymers mit wenigstens einer katalytischen Menge eines polymeren Silylamids in einem organischen Lösungsmittel, wobei das Silylamid ein polymeres Silylamid ist, das durch Umsetzen von Ammoniakanhydrid mit einem Gemisch von $R^1SiHX_2$ in einer Lösung gebildet wird, wobei $R^1$ eine niedrige Alkylgruppe mit 1 bis 6 Kohlenstoffatomen, eine substituierte oder unsubstituierte Cycloalkylgruppe mit 3 bis 6 Kohlenstoffatomen, eine substituierte oder unsubstituierte niedrige Alkenylgruppe mit 2 bis 6 Kohlenstoffatomen oder eine substituierte oder unsubstituierte niedrige Arylgruppe mit 6 bis 10 Kohlenstoffatomen ist und X ein Halogen ist, und $R^2SiX_3$, wobei $R^2$ Wasserstoff, eine niedrige Alkylgruppe mit 1 bis 6 Kohlenstoffatomen, eine substituierte oder unsubstituierte Cycloalkylgruppe mit 3 bis 6 Kohlenstoffatomen, eine substituierte oder unsubstituierte niedrige Alkenylgruppe mit 2 bis 6 Kohlenstoffatomen oder eine substituierte oder unsubstituierte niedrige Arylgruppe mit 6 bis 10 Kohlenstoffatomen ist, wodurch ein Polysilazan gebildet wird, und das Umsetzen des Polysilazans in Anwesenheit eines basischen Katalysators, der in der Lage ist, den NH-Funktionen im Polysilazan Protonen zu entziehen, um das polymere Silylamid zu bilden,

(b) das Umsetzen des Gemisches aus Schritt (a) bei Raumtemperatur oder höherer Temperatur, und

(c) das Absättigen des Reaktiongemisches mit einem reaktiven Elektrophil, wodurch das präkeramische Organosiliziumpolymer gebildet wird.

21. Verfahren nach Anspruch 1, umfassend

(a) das Erzeugen eines polymeren Silylamids in Anwesenheit eines Si-H enthaltenden Organosiliziumpolymers, wobei das Polysilylamid durch das Umsetzen des Coammonolyseprodukts eines Gemisches aus $R^1SiHX_2$, wobei $R^1$ eine niedrige Alkylgruppe mit 1 bis 6 Kohlenstoffatomen, eine substituierte oder unsubstituierte Cycloalkylgruppe mit 3 bis 6 Kohlenstoffatomen, eine substituierte oder unsubstituierte niedrige Alkenylgruppe mit 2 bis 6 Kohlenstoffatomen oder eine substituierte oder unsubstituierte niedrige Arylgruppe mit 6 bis 10 Kohlenstoffatomen ist und X ein Halogen ist, mit $R^2SiX_3$, wobei $R^2$ Wasserstoff, eine niedrige Alkylgruppe mit 1 bis 6 Kohlenstoffatomen, eine substituierte oder unsubstituierte Cycloalkylgruppe mit 3 bis 6 Kohlenstoffatomen, eine substituierte oder unsubstituierte niedrige Alkenylgruppe mit 2 bis 6 Kohlenstoffatomen oder eine substituierte oder unsubstituierte niedrige Arylgruppe mit 6 bis 10 Kohlenstoffatomen ist, in Anwesenheit eines basischen Katalysators, der in der Lage ist, ein Wasserstoffatom von einem Stickstoffatom, das einem Siliziumatom benachbart ist, zu entziehen, um das Polysilylamid in

situ zu erzeugen,

(b) das ausreichende Zugestehen von Reaktionszeit für das in situ erzeugte polymere Silylamid und das Si-H enthaltende Organosiliziumpolymer, um bei Raumtemperatur miteinander zu reagieren, und

(c) das Absättigen des Gemisches mit einem organischen Halid oder Halosilan, um das präkeramische Organosiliziumpolymer zu erzeugen.

22. Verfahren nach Anspruch 20 oder 21, wobei das Si-H enthaltende Organosiliziumpolymer ausgewählt ist aus Organopolysilanen mit der Formel: $[(RSiH)_x(RSi)_y]_n$, wobei x + y = 1, R eine niedrige Alkylgruppe mit 1 bis 6 Kohlenstoffatomen, eine niedrige Alkenylgruppe mit 2 bis 6 Kohlenstoffatomen, eine substituierte oder unsubstituierte niedrige Arylgruppe mit 6 bis 10 Kohlenstoffatomen ist, und n eine ganzzahlige Zahl größer 1 ist; Polycarbosilanen mit mehreren Wiederholungseinheiten der Formel $[R^aSi(H)\text{-}(CH_2)_q]$, wobei $R^a$ Wasserstoff ist, eine niedrige Alkylgruppe mit 1 bis 6 Kohlenstoffatomen, eine substituierte oder unsubstituierte Cycloalkylgruppe mit 3 bis 6 Kohlenstoffatomen oder eine substituierte oder unsubstituierte niedrige Arylgruppe mit 6 bis 10 Kohlenstoffatomen, und q eine ganzzahlige Zahl von 1 oder größer; und Polysiloxanen mit mehreren Wiederholungseinheiten der Formel $[R^bSi(H)O]_n$, wobei $R^b$ eine niedrige Alkylgruppe mit 1 bis 6 Kohlenstoffatomen, eine Cycloalkylgruppe mit 3 bis 6 Kohlenstoffatomen oder eine substituierte oder unsubstituierte niedrige Arylgruppe mit 6 bis 10 Kohlenstoffatomen ist, und n eine ganze Zahl größer 1 ist.

23. Verfahren nach Anspruch 22, wobei das Polycarbosilan wenigstens 25 Mol-% an Wiederholungseinheiten der Formel $[R^aSi(H)\text{-}(CH_2)_q]$ enthält und das Polysiloxan wenigstens 25 Mol-% an Wiederholungseinheiten der Formel $[R^bSi(H)O]_n$.

24. Verfahren nach Anspruch 22 oder 23, wobei R, $R^a$ und $R^b$ eine niedrige Alkylgruppe, vorzugsweise $CH_3$ sind.

25. Verfahren nach Anspruch 20 oder 21, wobei $R^1$ eine niedrige Alkylgruppe ist und $R^2$ Wasserstoff oder eine niedrige Alkylgruppe.

26. Verfahren nach Anspruch 20, wobei das Si-H enthaltende Organosiliziumpolymer ein Organopolysilan ist und x = 1, y = 0.

27. Verfahren nach Anspruch 20, wobei das Reaktionsgemisch mit einem Elektrophil $E\text{-}X^1$ gesättigt wird, wobei E aus niedrigen Alkylgruppen und Silylgruppen und $X^1$ aus Halogen, Sulfat und Sulfonat ausgewählt ist.

28. Verfahren nach Anspruch 20, 21 oder 22, wobei das Molverhältnis von Organopolysilan zu Silylamid zwischen 4 : 1 und 1 : 4 liegt.

29. Verfahren nach einem der Ansprüche 20 bis 28, wobei das präkeramische Produkt in einer Inertatmosphäre zur Bildung keramischen Materials pyrolysiert wird.

30. Verfahren nach Anspruch 29, wobei das Si-H enthaltende Organosiliziumpolymer ein Polysiloxan ist und das präkeramische Produkt unter einer Ammoniakatmosphäre pyrolisiert wird.

31. Verfahren nach Anspruch 22, wobei das Si-H enthaltende Organosiliziumpolymer Organopolysilan ist und in ausreichender Menge im Verhältnis zum polymeren Silylamid anwesend ist, daß der bei der Pyrolyse des Silylamids erhaltene überschüssige Kohlenstoff mit überschüssigem Silizium von der Pyrolyse der Organopolysilanverbindung reagieren kann, so daß ein keramisches Produkt hergestellt wird, das im wesentlichen kein freies Silizium oder freien Kohlenstoff enthält.

32. Verfahren nach Anspruch 21 und 22, wobei das Si-H enthaltende Organosiliziumpolymer ein Gemisch des Polycarbosilans und des Organopolysilans ist, zu dem eine ausreichende Menge von Organopolysilan zugefügt ist, so daß das überschüssige, bei der Pyrolyse des Organopolysilan erhaltene Silizium mit dem überschüssigen, bei der Pyrolyse von Polycarbosilan und dem in situ erzeugten polymeren Silylamid freigewordenen Kohlenstoff reagieren kann, wodurch die Menge an freiem Kohlenstoff reduziert wird.

## Revendications

1. Procédé de production de polymères organosiliciques précéramiques, procédé qui consiste :

(a) à faire réagir en solution de l'ammoniac anhydre avec un mélange de $R^1SiHX_2$, où $R^1$ est un groupe alkyle inférieur ayant 1 à 6 atomes de carbone, un groupe cycloalkyle substitué ou non substitué ayant 3 à 6 atomes de carbone, un groupe alcényle inférieur substitué ou non substitué ayant 2 à 6 atomes de carbone, ou un groupe aryle inférieur substitué ou non substitué ayant 6 à 10 atomes de carbone, et X est un halogène, et de $RSiX_3$ où R représente H, un groupe alkyle inférieur ayant 1 à 6 atomes de carbone, un groupe cycloalkyle substitué ou non substitué ayant 3 à 6 atomes de carbone, ou un groupe alcényle inférieur substitué ou non substitué ayant 2 à 6 atomes de carbone, ou un groupe aryle inférieur substitué ou non substitué ayant 6 à 10 atomes de carbone, de manière à former un mélange de polymères précurseurs ; et

(b) à faire réagir lesdits polymères précurseurs en présence d'un catalyseur basique capable d'éliminer le

proton des fonctions NH dans lesdits précurseurs pour former ledit polymère précéramique.

2. Procédé suivant la revendication 1, comprenant en outre l'étape supplémentaire de traitement dudit polymère précéramique avec un composé électrophile.

3. Procédé suivant la revendication 1, dans lequel X représente Cl, $R^1$ est un groupe alkyle inférieur et R représente H ou un groupe alkyle inférieur.

4. Procédé suivant la revendication 3, dans lequel $R^1$ représente $CH_3$.

5. Procédé suivant la revendication 4, dans lequel R représente H ou $CH_3$.

6. Procédé suivant la revendication 1 ou 3, dans lequel le rapport molaire $R^1SiHX_2$:$RSiX_3$ a une valeur de 8:1 à 1:6.

7. Procédé suivant la revendication 4, dans lequel le rapport molaire $R^1SiHX_2$:$RSiX_3$ a une valeur de 6:1 à 1:6.

8. Procédé suivant les revendications 1 et 6, dans lequel le rapport molaire a une valeur de 8:1 à 1:2.

9. Procédé suivant les revendications 3 et 6 ou la revendication 5 ou 7, dans lequel le rapport molaire a une valeur de 6:1 à 1:2.

10 Procédé suivant la revendication 9, dans lequel le rapport molaire a une valeur de 6:1 à 3:1, de préférence de 2:1 à 1:2.

11. Procédé suivant l'une quelconque des revendications précédentes, dans lequel ledit catalyseur basique est choisi entre des métaux alcalins, des hydrures de métaux alcalins et alcalino-terreux, des hydrures métalliques complexes, des alcoolates de métaux alcalins, des amidures de métaux alcalins et de métaux alcalino-terreux, des silylamidures de métaux alcalins et de métaux alcalino-terreux et des composés organiques de métaux alcalins.

12. Procédé suivant la revendication 2, dans lequel l'électrophile répond à la formule $E-X^1$ dans laquelle E est un groupe organique ou silyle et $X^1$ est un halogénure, un sulfate ou un sulfonate.

13. Procédé suivant la revendication 12, dans lequel E est un groupe alkyle inférieur ou un groupe silyle.

14. Procédé suivant l'une quelconque des revendications précédentes, dans lequel le polymère précéramique est pyrolysé dans un courant de gaz inerte à une température suffisante et pendant une durée suffisante pour former une matière céramique.

15. Procédé suivant la revendication 14, dans lequel le polymère précéramique est pyrolysé dans un courant d'ammoniac.

16. Procédé suivant la revendication 2, pour la préparation de fibres céramiques, qui consiste en outre à introduire des fonctions C=C dans le produit de co-ammonolyse ; à former des fibres précéramiques, à faire mûrir lesdites fibres précéramiques par une réaction d'hydrosilylation puis à pyrolyser les fibres précéramiques mûries.

17. Procédé suivant la revendication 16, dans lequel les fonctions C=C sont introduites par le fait que R ou $R^1$ représente un groupe alcényle inférieur substitué ou non substitué ayant 2 à 6 atomes de carbone.

18. Procédé suivant la revendication 16, dans lequel les fonctions C=C sont introduites par addition d'un troisième composé contenant une fonction non saturée dans le mélange contenant l'ammoniac anhydre, $R^1SiHX_2$ et $RSiX_3$.

19. Procédé suivant la revendication 16, 17 ou 18, dans lequel la maturation est amorcée par irradiation avec un faisceau d'électrons, une source de rayons X ou des rayons ultraviolets.

20. Procédé suivant la revendication 1, qui consiste :

(a) à mélanger un polymère organosilicique contenant des motifs répétés Si-H avec au moins une quantité catalytique d'un silylamidure polymérique dans un solvant organique, le silylamidure étant un silylamidure polymérique formé par réaction en solution d'ammoniac anhydre avec un mélange de $R^1SiHX_2$, où $R^1$ est un groupe alkyle inférieur ayant 1 à 6 atomes de carbone, un groupe cycloalkyle substitué ou non substitué ayant 3 à 6 atomes de carbone, un groupe alcényle inférieur substitué ou non substitué ayant 2 à 6 atomes de carbone ou un groupe aryle inférieur substitué ou non substitué ayant 6 à 10 atomes, et X est un halogène, et de $R^2SiX_3$ ou $R^2$ représente H, un groupe alkyle inférieur ayant 1 à 6 atomes de carbone, un groupe cycloalkyle substitué ou non substitué ayant 3 à 6 atomes de carbone, un groupe alcényle inférieur substitué ou non substitué ayant 2 à 6 atomes de carbone, ou un groupe aryle inférieur substitué ou non substitué ayant 6 à 10 atomes de carbone, de manière à former un polysilazane ; et à faire réagir ledit polysilazane en présence d'un catalyseur basique capable d'éliminer le proton des fonctions NH dans ledit polysilazane pour former ledit silylamidure polymérique ;

(b) à faire réagir le mélange de l'étape (a) à la température ambiante ou au-dessus ; et

(c) à désactiver le mélange réactionnel avec un électrophile réactif de manière à former ainsi ledit polymère organosilicique précéramique.

21. Procédé suivant la revendication 1, qui consiste :

(a) à engendrer un silylamidure polymérique en présence d'un polymère organosilicique contenant des

groupes Si-H de manière que le polysilylamidure soit engendré par réaction du produit de co-ammonolyse d'un mélange de $R^1SiHX_2$ où $R^1$ est un groupe alkyle inférieur ayant 1 à 6 atomes de carbone, un groupe cycloalkyle substitué ou non substitué ayant 3 à 6 atomes de carbone, un groupe alcényle inférieur substitué ou non substitué ayant 2 à 6 atomes de carbone, ou un groupe aryle inférieur substitué ou non substitué ayant 6 à 10 atomes de carbone ; et X est un halogène ; avec $R^2SiX_3$ ou $R^2$ représente H, un groupe alkyle inférieur ayant 1 à 6 atomes de carbone, un groupe cycloalkyle substitué ou non substitué ayant 3 à 6 atomes de carbone ou un groupe alcényle inférieur substitué ou non substitué ayant 2 à 6 atomes de carbone, ou un groupe aryle inférieur substitué ou non substitué ayant 6 à 10 atomes de carbone, en présence d'un catalyseur basique capable de déprotoner par élimination d'hydrogène un atome d'azote adjacent à l'atome de silicium pour engendrer le polysilylamidure in situ ;

(b) à faire réagir le silylamidure polymérique engendré in situ et le polymère organosilicique contenant des groupes Si-H pendant une durée suffisante l'un avec l'autre à la température ambiante ; et

(c) à désactiver le mélange avec un halogénure organique ou un halogénosilane pour produire le polymère précéramique organosilicique.

22. Procédé suivant la revendication 20 ou 21, dans lequel le polymère organosilicique contenant des groupes Si-H est choisi parmi des organopolysilanes de formule : $[(RSiH)_x(RSi)_y]_n$ dans laquelle la somme x + y = 1, R est un groupe alkyle inférieur ayant 1 à 6 atomes de carbone, un groupe alcényle inférieur ayant 2 à 6 atomes de carbone, un groupe aryle inférieur substitué ou non substitué ayant 6 à 10 atomes de carbone, et n est un nombre entier supérieur à 1 ; des polycarbosilanes ayant une pluralité de motifs répétés de formule $[R^aSi(H)\text{-}(CH_2)_q]$ où $R^a$ représente H, un groupe alkyle inférieur ayant 1 à 6 atomes de carbone, un groupe cycloalkyle ayant 3 à 6 atomes de carbone, un groupe aryle inférieur substitué ou non substitué ayant 6 à 10 atomes de carbone et q est un nombre entier égal ou supérieur à 1 ; et des polysiloxanes portant une pluralité de motifs répétés de formule $[R^bSi(H)O]_n$ où $R^b$ est un groupe alkyle inférieur ayant 1 à 6 atomes de carbone, un groupe cycloalkyle ayant 3 à 6 atomes de carbone, un groupe aryle inférieur substitué ou non substitué ayant 6 à 10 atomes de carbone et n est un nombre entier supérieur à 1.

23. Procédé suivant la revendication 22, dans lequel le polycarbosilane contient au moins 25 moles % de motifs répétés de formule $[R^aSi(H)\text{-}(CH_2)_q]$ et le polysiloxane contient au moins 25 moles % de motifs répétés de formule $[R^bSi(H)O]_n$.

24. Procédé suivant la revendication 22 ou 23, dans lequel R, $R^a$ et $R^b$ représentent un groupe alkyle inférieur, de préférence $CH_3$.

25. Procédé suivant la revendication 20 ou 21, dans lequel $R^1$ est un groupe alkyle inférieur, $R_2$ représente H ou un groupe alkyle inférieur.

26. Procédé suivant la revendication 20, dans lequel le polymère organosilicique contenant des groupes Si-H est un organopolysilane, x = 1 et y = 0.

27. Procédé suivant la revendication 20, dans lequel le mélange réactionnel est désactivé avec un électrophile, $E\text{-}X^1$, où E est choisi entre des groupe alkyle inférieur et des groupes silyle et $X^1$ est choisi entre un halogène, un sulfate et un sulfonate.

28. Procédé suivant la revendication 20, 21 ou 22, dans lequel le rapport molaire de l'organopolysilane au silylamidure va de 4:1 à 1:4.

29. Procédé suivant l'une quelconque des revendications 20 à 28, dans lequel le produit précéramique est pyrolysé dans une atmosphère inerte pour former une matière céramique.

30. Procédé suivant la revendication 29, dans lequel le polymère organosilicique contenant des groupes Si-H est un polysiloxane et le produit précéramique est pyrolysé dans une atmosphère d'ammoniac.

31. Procédé suivant la revendication 22, dans lequel le polymère organosilicique contenant des groupes Si-H est un organopolysilane et est présent en quantité suffisante par rapport au silylamidure polymérique pour que le carbone en excès obtenu par pyrolyse du silylamidure puisse être amené à réagir avec le silicium en excès résultant de la pyrolyse de l'organopolysilane, en formant ainsi un produit céramique qui ne contient pratiquement pas de silicium libre ou de carbone libre.

32. Procédé suivant les revendications 21 et 22, dans lequel le polymère organosilicique contenant des groupes Si-H est un mélange du polycarbosilane et de l'organopolysilane, avec addition d'une quantité suffisante de l'organopolysilane pour que le silicium en excès obtenu par pyrolyse de l'organopolysilane puisse réagir avec le carbone en excès résultant de la pyrolyse du polycarbosilane et du silylamidure polymérique engendré in situ, de manière à réduire ainsi la quantité de carbone libre.